# EUROPEAN PATENT APPLICATION

(11) **EP 2 750 379 A1**
(43) Date of publication of application: **02.07.2014**
(21) Application number: 13197115.2
(22) Date of filing: 29.09.2010
(51) Int. Cl.: H04N 5/775, G11B 27/34, H04N 5/445, G11B 27/32, H04N 21/41, H04N 21/426, H04N 21/433, H04N 21/458, H04N 21/472

(54) **Digital broadcast receiver and recorded-program display method**

(30) Priority: 30.09.2009 JP 2009228929; 06.07.2010 JP 2010154266
(62) Divisional of application: 10181958.9
(71) Applicant: Kabushiki Kaisha Toshiba, Tokyo (JP)
(72) Inventor: Ida, Tomotaka, Tokyo (JP); Miyazawa, Akira, Tokyo (JP); Kuwahara, Kazuki, Tokyo (JP)
(74) Representative: HOFFMANN EITLE

(57) **Abstract**

According to the embodiments, there is provided a digital broadcast receiver including: a video recorder configured to record, among a plurality of broadcast programs, subject programs based on record-designation information, the record-designation information designating (i) a plurality of channels and (ii) a plurality of different time zones; and a recorded-program list generator configured to generate a recorded-program list that only displays the subject programs among the plurality of broadcast programs.

## Description

### CROSS-REFERENCE TO RELATED APPLICATION(S)

This application is based upon and claims the benefit of priorities from Japanese Patent Application No. 2009-228929, filed on September 30, 2009, and from Japanese Patent Application No. 2010-154266, filed on July 6, 2010, the entire contents of which are incorporated herein by reference.

### BACKGROUND

### 1. Field

Embodiments described herein relate generally to a digital broadcast receiver which can record a program received through a broadcast, and a method of displaying a recorded program.

### 2. Description of the Related Art

Recently, a terrestrial digital broadcast and a BS/CS digital broadcast are fully available, and many programs can be watched at a high image quality and a high sound quality. A digital broadcast is provided with a function of an EPG (Electronic Program Guide). A program list of the day or one week ahead is displayed simply by pressing a button of a remote controller corresponding to the receiver, so that the program content (such as the broadcast time and the cast) is displayed, information search is performed, and a program is reserved to be viewed recorded.

As the number of channels increases, the user may wish to watch a lot more programs, and the broadcast times thereof may be overlapped sometimes. Therefore, for the convenience of the user, a program is recorded and then watched.

For example, JP-2006-033708-A discloses a television program recording and reproducing apparatus has been proposed which includes: a television broadcast receiving portion that receives a television broadcast; a program recording portion that records a record-reserved broadcast program; a recorded-program information recording portion that records the broadcast channel and broadcast time of the program to be recorded by the program recording portion, as recorded-program information; and a display controlling portion that, based on the recorded-program information, performs a process to present a recorded program in a list format in which the broadcast channel and the broadcast time are set to the abscissa and the ordinate, respectively.

JP-2010-028619-A discloses a recorded program list displaying apparatus capable of displaying a program list of the past by omitting a time zone where no program is recorded and by stepwisely enlarging/combining the display unit, in order to reduce the user's labor for reaching a recorded program. Further, the time axis is displayed in different manners between a time zone where a program is recorded and a time zone where a program is not recorded, and a recorded program and a non-recorded program are displayed in different brightness or shading, so that the recorded program is visually explicitly shown in the program list.

In JP-2006-033708-A, a program list is generated based on data of the EPG, and past programs are displayed in the same format with the EPG-based program list. Programs which are not recorded are not displayed, or are displayed in a visually inconspicuous manner. However, display areas are assigned for the non-recorded programs still remain, and hence the limited display area is not effectively used.

In JP-2010-028619-A, while an improvement to reduce the user's labor is made, an improvement to apply the different display manners between a recorded program and a non-recorded program not only on the time axis but on the channel axis and an improvement to apply recorded-program list to a function (referred to as "continuous recording") to record a program of at least one of record-designated channel (or, to "simultaneously" record programs of plural record-designated channels) for plural record-designated time zones are not effectively used.

In a digital broadcast receiver having many tuners, and which incorporates a video recording device of large capacity, or to which an external video recording device is connected, plural programs can be simultaneously and continuously recorded. Accordingly, it is desired to set a display state in which recorded programs are efficiently displayed, and to allow the user to easily select the recorded program for watching.

### SUMMARY

One object of the present invention is to provide a digital broadcast receiver and a recorded-program display method in which a program list of recorded programs can be efficiently displayed, and, when a recorded program is to be watched, the user can easily select the recorded program.

According to the embodiments, there is provided a digital broadcast receiver including: a video recorder configured to record, among a plurality of broadcast programs, subject programs based on record-designation information, the record-designation information designating (i) a plurality of channels and (ii) a plurality of different time zones; and a recorded-program list generator configured to generate a recorded-program list that only displays the subject programs among the plurality of broadcast programs.

According to the embodiments, there is further provided a recorded-program display method including: recording, among a plurality of broadcast programs, subject programs based on record-designation information, the record-designation information designating (i) a plurality of channels and (ii) a plurality of different time zones; generating a recorded-program list that only displays the subject programs among the plurality of broadcast programs; and displaying the recorded-program list on a screen of a display device.

According to the embodiments, a program list of recorded programs can be efficiently displayed, and, when a recorded program is to be watched, the user can easily select the recorded program.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.
Fig. 1 illustrates an example block configuration of a digital broadcast receiver according to an embodiment.
Fig. 2 illustrates an example program list.
Fig. 3 illustrates an example recorded-program list.
Figs. 4A and 4B illustrate an example operation flow for recording programs.
Fig. 5 illustrates an example operation flow for generating the recorded-program list and a displaying process.
Fig. 6 illustrates Embodiment 2 of the recorded-program list.
Fig. 7 illustrates Embodiment 3 of the recorded-program list.
Fig. 8 illustrates Embodiment 4 of the recorded-program list.
Fig. 9 illustrates Embodiment 5 of the recorded-program list.
Fig. 10 illustrates Embodiment 6 of the recorded-program list.
Fig. 11 illustrates Embodiment 7 of the recorded-program list.
Fig. 12 exemplarily illustrates a mark for indicating an "archive".
Fig. 13 illustrates Embodiment 8 of the recorded-program list.
Fig. 14 illustrates Embodiment 9 of the recorded-program list.
Fig. 15 illustrates an example of an emphasizer in Embodiment 10 of the recorded-program list.
Fig. 16 illustrates another example of the emphasizer in Embodiment 10 of the recorded-program list.
Fig. 17 illustrates a further example of the emphasizer in Embodiment 10 of the recorded-program list.
Fig. 18 illustrates Embodiment 11 of the recorded-program list.
Fig. 19 illustrates Embodiment 13 of the recorded-program list.
Fig. 20 illustrates an operation screen to change record setting of a non-record-designated channel.
Fig. 21 illustrates an example of an emphasizer in Embodiment 14 of the recorded-program list.
Fig. 22 illustrates another example of the emphasizer in Embodiment 14 of the recorded-program list.
Fig. 23 illustrates a further example of the emphasizer in Embodiment 14 of the recorded-program list.
Fig. 24 illustrates Embodiment 15 of the recorded-program list.
Fig. 25 illustrates Embodiment 17 of the recorded-program list.
Fig. 26 illustrates an operation screen to change record setting of a non-record-designated time zone.
Fig. 27 illustrates Embodiment 18 of the recorded-program list.
Fig. 28A and 28B illustrate Embodiment 19 of the recorded-program list.

### DETAILED DESCRIPTION

Hereinafter, embodiments of the invention will be described with reference to the drawings.

### (Embodiment 1)

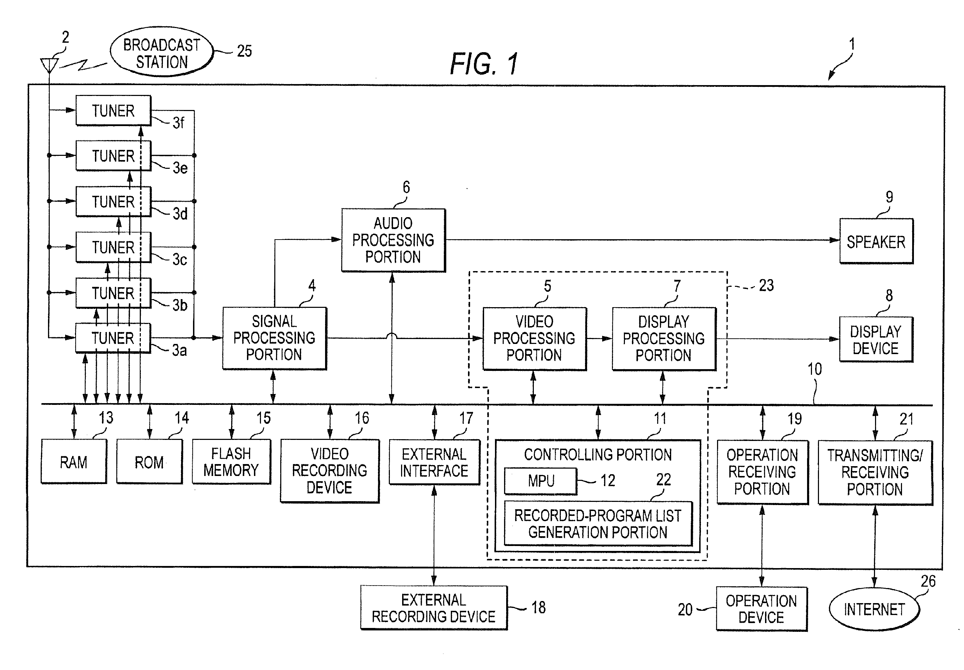

Fig. 1 illustrates an example block diagram of a digital broadcast receiver 1 according to an embodiment. An antenna 2 receives a broadcast radio wave transmitted from a broadcast station 25, and can be used for a terrestrial digital broadcast or a satellite digital broadcast. Tuners 3a to 3f select a broadcast signal of a desired channel from broadcast signals of the terrestrial digital broadcast or the satellite digital broadcast, and demodulate the broadcast signal in accordance with the modulation system of the corresponding digital broadcast. The signal is demodulated to digital video and audio signals by the OFDM (Orthogonal Frequency Division Multiplexing) demodulation in the case of a terrestrial digital broadcast signal, or by the PSK (Phase Shift Keying) demodulation in the case of a satellite digital broadcast signal, and then supplied to a signal processing portion 4.

The signal processing portion 4 selectively applies a given digital signal process on the digital video and audio signals supplied from the tuners 3, and then supplies the signals to a video processing portion 5 and an audio processing portion 6. The signal processing portion 4 has functions of an MPEG (Moving Picture Experts Group) encoder, an MPEG decoder, a video/audio decoder, and the like.

The video processing portion 5 performs the plane management for drawing windows of digital video data supplied from the signal processing portion 4, a data broadcast transferred through a bus, and the GUI (Graphical User Interface), to thereby superimpose the data on the video data, and sends the resulting signal to a display processing portion 7.

The display processing portion 7 converts the signal to the format (the pixel number, the frame frequency, and the scanning method) so as to be displayed on a display device 8, arbitrarily adjusts the display color, and then supplies the resulting signal to the display device 8 to display a video image. The audio processing portion 6 converts the digital audio data supplied from the signal processing portion 4, to an analog audio signal which can be reproduced by a speaker 9, and then supplies the analog audio signal to the speaker 9 to reproduce the sound.

In the digital broadcast receiver 1, the whole operations including the above-described receiving operation are generally controlled by a controlling portion 11. The controlling portion 11 has an MPU (Micro Processing Unit) 12, and controls the components connected to the MPU through a bus 10.

A RAM (Random Access Memory) 13 is a read/write memory which stores various data that are required in the data processing of the controlling portion 11, and functions as a buffer memory which stores video data and the like. A ROM (Read Only Memory) 14 is a read only memory which stores control programs to be executed by the controlling portion 11, and the like.

A flash memory 15 is a nonvolatile semiconductor memory which is rewritable so that data are not erased even when power is switched off. The flash memory 15 has a function of storing data such as various video and audio settings, recording and viewing reservations, and the like which are performed by the user. Data such as a designated channel and a designated time in the recording are temporarily stored into the RAM 13, and then stored into the flash memory 15.

The digital broadcast receiver 1 includes a video recording device 16. The video recording device 16 includes an HDD (Hard Disk Drive), an SSD (Solid State Drive), or the like. The video recording device 16 has an interface portion, and records or reproduces a broadcast program or the like into or from the HDD or the SSD through the interface portion. Programs of plural record-designated channels can be simultaneously recorded into the video recording device 16 for a record-designated time zone.

An external interface 17 is an interface such as USB (Universal Serial Bus), IEEE 1394 (Institute of Electrical and Electronic Engineers 1394), eSATA (external Serial ATA (AT Attachment)), or the like, and an external recording device 18 including a drivers and the like, such as a USB memory, a USB external device, an HDD, an SSD, a CD-R/RW, or a DVD writer is connected to the external interface. A program can be recorded into the external recording device 18 through the external interface 17. The user can selectively use the video recording device 16 or the external recording device 18 for recording.

The copy control may be applied to a digital broadcast. In this case, a program can be recorded only once, and the program cannot be copied but can be moved. The term "move" means changing (moving) of a stored location thereof in an HDD or an SSD. After moving, the program which is recorded in an HDD or an SSD is automatically erased. A program that is called "dubbing 10" in which a program recorded in an HDD or an SSD can be copied nine times and the tenth copy is performed as moving can be copied to another HDD or SSD

(including another partition of the same HDD or SSD), or an optical disk such as a DVD. In the embodiments, a process for copying/moving a program recorded in an HDD or SSD of the video recording device 16 or the external recording device 18 to another video recording device or external recording device is referred to as "archive".

An operation receiving portion 19 receives an operation signal which is transmitted from an operation device 20, and transfers the signal to the controlling portion 11. For example, the operation device 20 is a remote controller using wireless communication based on an infrared ray, Bluetooth (trademark), or the like, a wired or wireless keyboard or mouse, or the like, and sends an operation signal. The operation receiving portion 19 receives the operation signal from such a remote controller, a keyboard, or a mouse.

The digital broadcast receiver 1 is connected to the Internet 26 through a transmitting/receiving portion 21. According to the configuration, the digital broadcast receiver 1 can perform information transmission with an apparatus such as a server on the Internet 26 through the transmitting/receiving portion 21.

### The controlling portion 11 has a function of a recorded-program list generation portion 22. The digital broadcast receiver 1 has the plural tuners 3, and can designate plural programs to be recorded continuously and simultaneously. That is, the digital broadcast receiver 1 is enabled to perform a "continuous recording" to record a program of at least one record-designated channel (or, to "simultaneously record programs of plural record-designated channels) for a record-designated time zone. The recorded-program list generation portion 22 generates a recorded-program list of the plural channels (record-designated channels) designated by the user as a subject of recording, and times (record-designated time zones) designated by the user for recording the channels.

Through the EPG-based program list on the screen 8a, the user can select a program to record the program or to reserve recording of the program. The EPG is provided for facilitating the user to select a program in accordance with a recent trend of growing the number of channels. In the digital broadcast receiver 1, the EPG is displayed on the screen 8a of the display device 8, for example, in a similar manner to a television program list in a newspaper. While viewing the program list on the screen 8a, the user may select a program, display detailed information, and reserve recording, by using the remote controller.

The manner of displaying an EPG-based program list is different depending on the manufacturer and type of the broadcast receiver. In this embodiment, similarly with the newspaper's television program list, the program list has the horizontal channel axis and the vertical time axis, and programs which are to be broadcasted after the current time are arranged. When a program is selected, there are displayed the title, and broadcast date/time, and also, detailed information such as the cast and the contents may be additionally displayed.

Similarly with the video image and the sound, the EPG data are packetized, and transmitted while multiplexed. Data of program information are contained in the EIT (Event Information Table) of the SI (Service Information). The controlling portion 11 analyzes the information supplied from the signal processing portion 4, and generates a program list. The generated program list is displayed on the screen 8a of the display device 8 by a display controlling portion 23 which is configured by the video processing portion 5, the display processing portion 7, and the controlling portion 11.

For example, the digital broadcast receiver 1 has a recording function in which one or plural channels and the time are designated, and the one or plural record-designated channels are (simultaneously) recorded for the record-designated time zone (referred to as "continuous recording"). The record-designated time zone may be one or plural time zones. A "time zone" means a series of time.

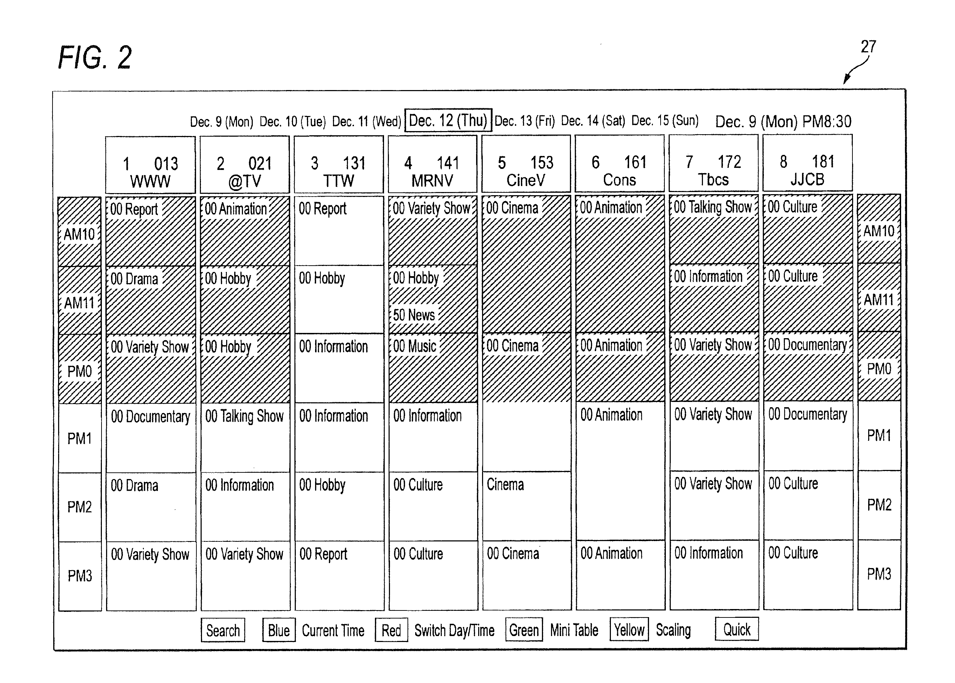

Fig. 2 exemplarily illustrates the EPG-based program list. In the program list 27, recording can be designated for plural channels and plural time zones. In Fig. 2, channels 1, 2, 4, 5, 6, 7 and 8 are designated with a time zone of three hours from 10 A.M. to 1 P.M. of December 12 (Tue.). The record-designated times and channels are changed (hatched) so that the user easily checks the time zone and the channels. Reservation designation can also be performed by changing the date and time, the time zone, and the channel.

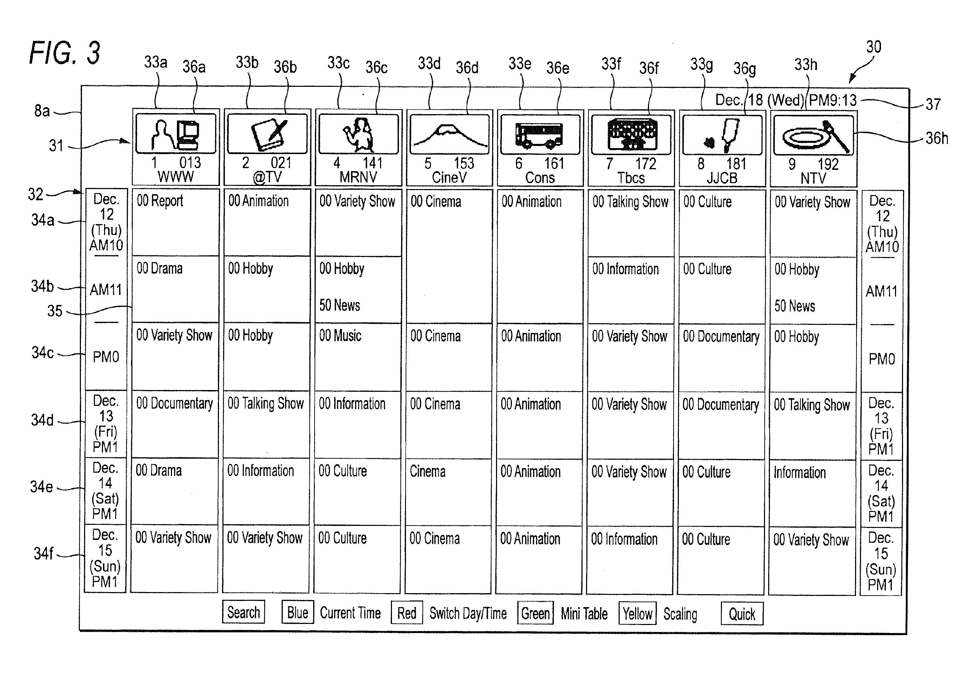

Fig. 3 exemplarily illustrates the recorded-program list. The recorded-program list 30 is displayed on whole the screen 8a of the display device 8, or a part of the recorded-program list may be displayed on a designated range within the screen 8a. In Fig. 3, the list is displayed in a substantially whole of the screen 8a. The recorded-program list 30 is generated by the recorded-program list generation portion 22, and displayed on the screen 8a by the display controlling portion 23.

In the recorded-program list 30, for example, similarly with that of the EPG-based program list, the channel axis 31 indicating a channel is set in the horizontal direction of the screen 8a, and the time axis 32 indicating the time is set in the vertical direction. While the general EPG displays the whole present/future receivable channels along the continuous time period after the current time, the recorded-program list 30 displays recorded programs in accordance with the plural record-designated channels and the record-designated time zones.

In the recorded-program list 30 according to the embodiment, only the record-designated channels and the record-designated time zones are displayed. That is, in the recorded-program list 30, only programs having been recorded are displayed. Programs being recorded and programs to be recorded may also be displayed. The record-designated time zone may be one or plural time zones. When several tens of channels are receivable and when all channels including non record-designated channels are displayed in the recorded-program list, a long time is required for the user to search a program to be watched. Further, when the whole program list before the current time is displayed, the display size becomes large as several days or more elapses, and hence the searching operation is cumbersome. Therefore, it is convenient for the user that only record-designated channels and record-designated time zones are displayed in the form of a program list.

In Fig. 3, the record-designated channels are displayed on the channel axis 31, and channel display portions 33a to 33h for eight channels are displayed. When a cursor button of the remote controller is operated, the screen is scrolled right or left, so that other channels which are not displayed on the screen 8a can be viewed.

The record-designated times are displayed on the time axis 32, and time display portions 34a to 34f for six hours are displayed. The time display portion 34a displays a time zone of one hour from 10 A.M. to 11 A.M. of December 12, the time display portion 34b displays a time zone of one hour from 11 A.M. to 0 P.M. of December 12, and the time display portion 34c displays a time zone of one hour from 0 P.M. to 1 P.M of December 12. The time display portions 34a to 34c show the continuous time zone of three hours. The time display portion 34d displays a time zone of one hour from 1 P.M. to 2 P.M. of December 13, the time display portion 34e displays a time zone of one hour from 1 P.M. to 2 P.M. of December 14, and time display portion 34f displays a time zone of one hour from 1 P.M. to 2 P.M. of December 15. When the cursor button of the remote controller is operated, the screen is scrolled up or down, so that other time zones which are not displayed on the screen 8a can be viewed. The time axis 32 is displayed also in the right side of the screen.

In Fig. 3, although only the genre names of programs are described in a program display portion 35 for simplification, the name of a recorded program and brief introduction thereof may be described for each channel and time. The description contents may be the same with that displayed in the EPG-based program list. When a program is recorded, also program information data based on EPG data are simultaneously recorded, and used to generate the recorded-program list 30 in the recorded-program list generation portion 22.

In Fig. 3, thumbnail display portions 36a to 36h are displayed in the channel display portions 33a to 33h. A thumbnail is an image which is reduced in size so that many images are displayed in the form of a list. The image is a motion image or a still image. Immediately after the recorded-program list 30 is displayed on the screen 8a, thumbnails of programs of channels corresponding to the uppermost time display portion 34a are displayed in the thumbnail display portions 36a to 36h.

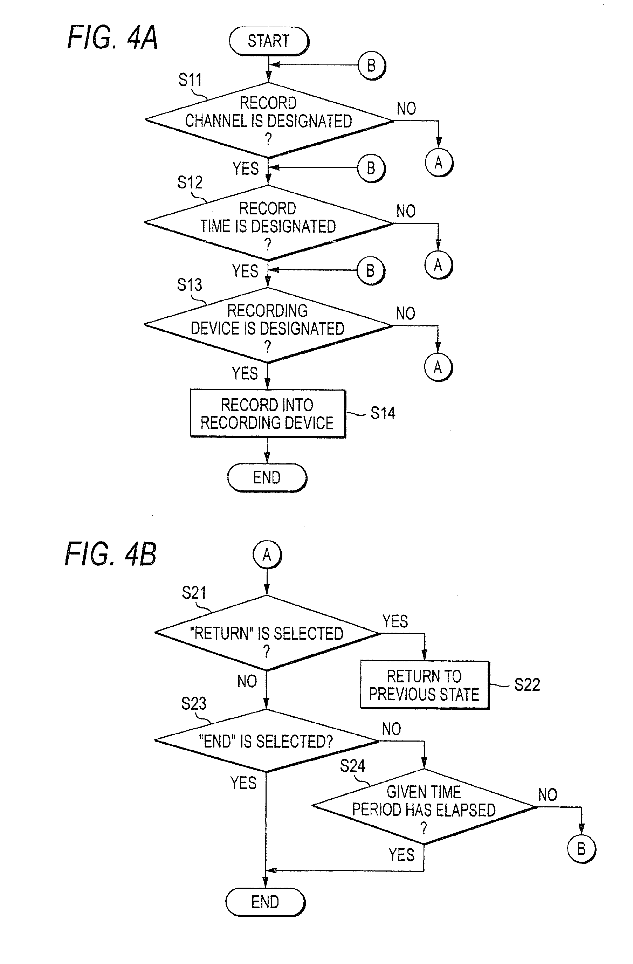

Figs. 4A and 4B exemplarily illustrate the operation flow for recording programs. The operation flow in the case where one or plural channels and a time zone are designated, and one or plural programs of the record-designated channels are (simultaneously) recorded for the record-designated time will be described. In S11 of Fig. 4A, the controlling portion 11 determines whether the user designates a record channel or not. While viewing the program list, the user designates a channel to be recorded, by using the remote controller or the like. The controlling portion 11 receives a signal from the operation receiving portion 19, and sets a record channel.

When a record channel is not designated, the control is transferred to S21 of the operation flow shown in Fig. 4B. In S21, the controlling portion 11 determines whether "RETURN" is selected by using the remote controller or the like or not. If selected, the control is transferred to S22 to return to the previous state. In this case, the previous state means that the state before the recording process is started. If "RETURN" is not selected, the control is transferred to S23 to determine whether "END" is selected or not. If "END" is selected, the flow is ended. If "END" is not selected, the control is transferred to S24 to determine whether a given time period has elapsed or not. If the given time period has elapsed, the flow is ended. For example, the given time period is set between one minute and two minutes. If the given time period has not elapsed, the control is returned to S11.

In S12, the controlling portion 11 determines whether the user designates the record time or not. When receiving the signal from the operation receiving portion 19, the controlling portion 11 sets the record time. If the record time is not designated, the control is transferred to S21 of the operation flow shown in Fig. 4B. The operations of Fig. 4B have been described above, and hence their description is omitted. If the given time period has not elapsed, the control is returned to S12.

In S13, the controlling portion 11 determines whether the user designates the recording device or not. If designated, the controlling portion 11 sets the video recording device 16 or the external recording device 18 as the recording destination. If not designated, the control is transferred to S21 of the operation flow shown in Fig. 4B. The operations of Fig. 4B have been described above, and hence their description is omitted. If the given time period has not elapsed, the control is returned to S13.

In S14, the controlling portion 11 simultaneously records programs of the plural record-designated channels into the designated recording device for the record-designated time zones.

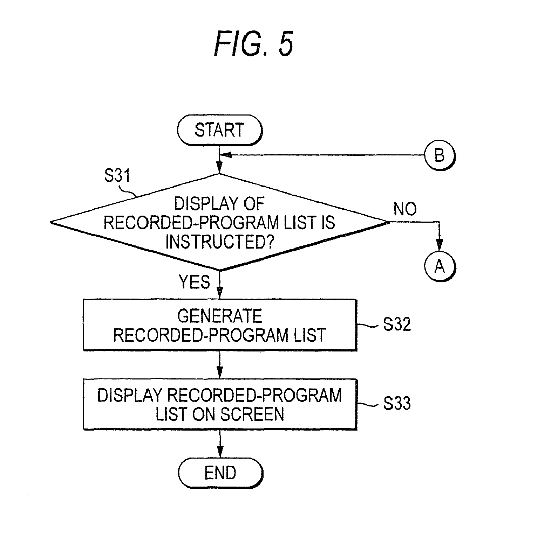

Fig. 5 exemplarily illustrates the operation flow for generating the recorded-program list and the displaying process. In S31, the controlling portion 11 determines whether the user instructs the display of the recorded-program list 30 or not. When receiving a display instructing signal from the operation receiving portion 19, the controlling portion 11 transfers to S32. If the display of the recorded-program list 30 is not instructed, the control is transferred to S21 of the operation flow shown in Fig. 4B. The operations of Fig. 4B have been described above, and hence their description is omitted. If the given time period has not elapsed, the control is returned to S31.

In S32, the recorded-program list generation portion 22 generates the recorded-program list from the data such as the designated channel and the designated time for recording stored in the flash memory 15, the program information recorded in the video recording device 16 or the external recording device 18, and the like. In S33, the display controlling portion 23 displays the recorded-program list on the screen 8a of the display device 8.

### (Embodiment 2)

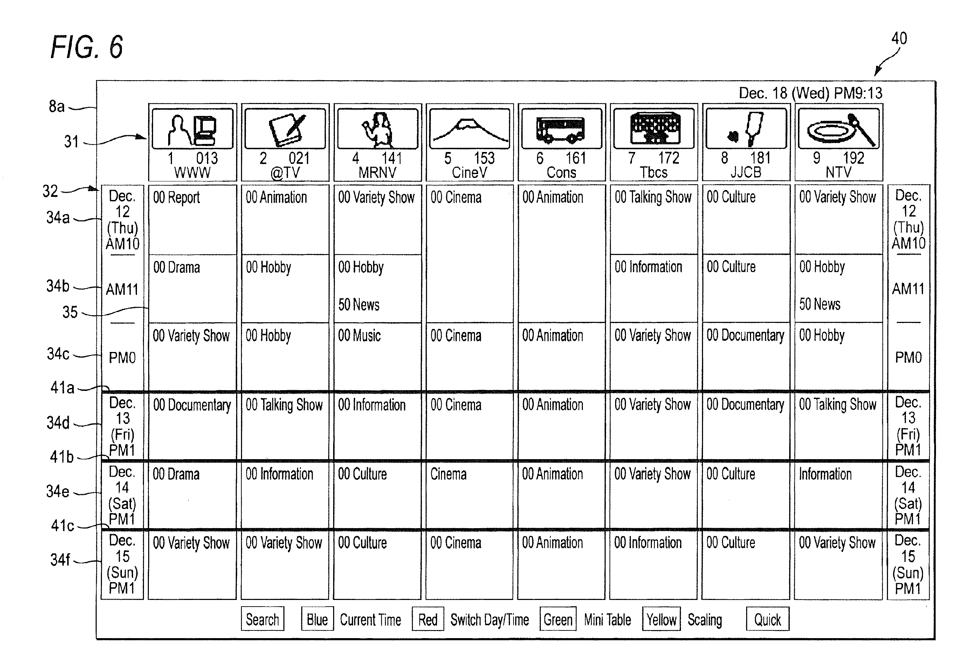

Fig. 6 illustrates Embodiment 2 of the recorded-program list. A block configuration of a digital broadcast receiver of Embodiment 2 is identical with that of the digital broadcast receiver 1 of Embodiment 1 shown in Fig. 1. The embodiment is different from Embodiment 1 shown in Fig. 3 in that, in a recorded-program list 40, the manner of displaying a discontinuous boundary portion between record-designated times on the time axis 32 is changed. In Fig. 6, boundary lines 41a, 41b, 41c are indicated by thick lines of a deep color, so that the user can easily know that the boundaries are discontinuous boundary portions of times. As long as the lines clearly indicate discontinuous boundary portions, the color and thickness of the lines may be arbitrarily set. In place of adding the lines, the background color of the program display portion 35 may be differentiated for each time zone. Also in this case, the discontinuity can be easily known.

### (Embodiment 3)

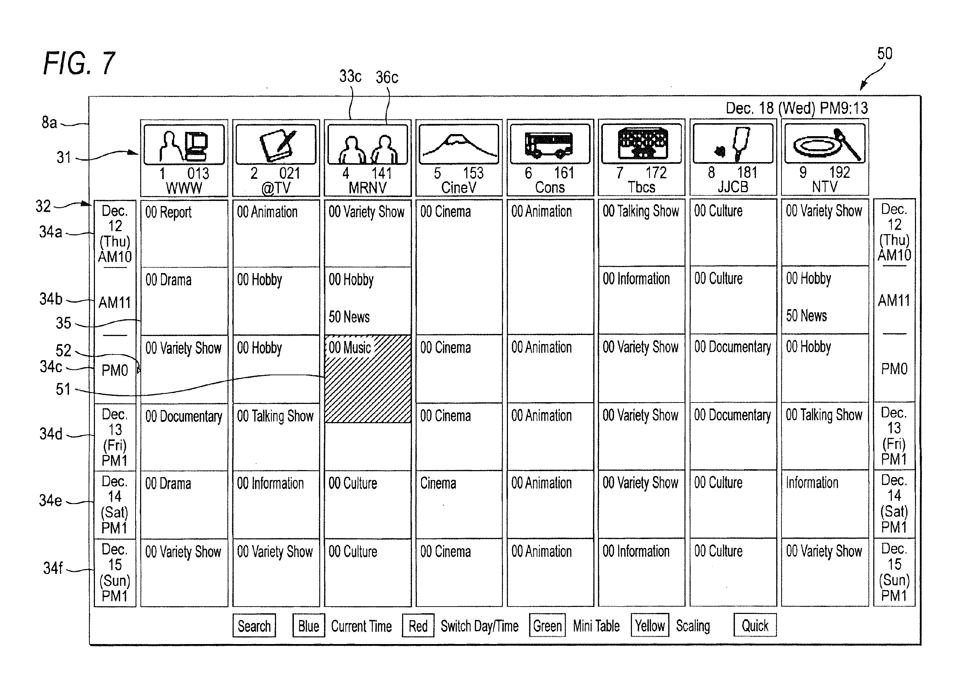

Fig. 7 illustrates Embodiment 3 of the recorded-program list. A block configuration of a digital broadcast receiver of Embodiment 3 is identical with that of the digital broadcast receiver 1 of Embodiment 1 shown in Fig. 1. The embodiment is different from Embodiment 1 shown in Fig. 3 in that, on the time axis, a mark is indicated in the time zone of a record-designated program. In a recorded-program list 50, when the user selects a program 51 in the third time zone from the upper end in the third channel (4 141) from the left, for example, the frame of the program is slightly enlarged and highlighted (hatched), and, on the right side of the time axis 32, a mark 52 is displayed at the position of the program 51 on the time axis. A virtually-retrospective is expressed on the recorded-program list, and the position within the past time zones is clearly indicated, thereby causing the user to be conscious that the user is in virtual date and time which are entirely different from the current time.

In Fig. 7, the mark is triangular. Alternatively, the mark may be displayed in any of various other shapes. When virtual date and time are displayed as they are, the user is more conscious that the user is in virtual date and time. The background color of the time zone may be different from that of other time zones.

When the user selects the program 51, the thumbnail of the thumbnail display portion 36c is switched to that of the program 51. At the other thumbnail display portions than the thumbnail display portion 36c, thumbnails of programs of the channels in the uppermost time display portion 34a are displayed.

(Embodiment 4)

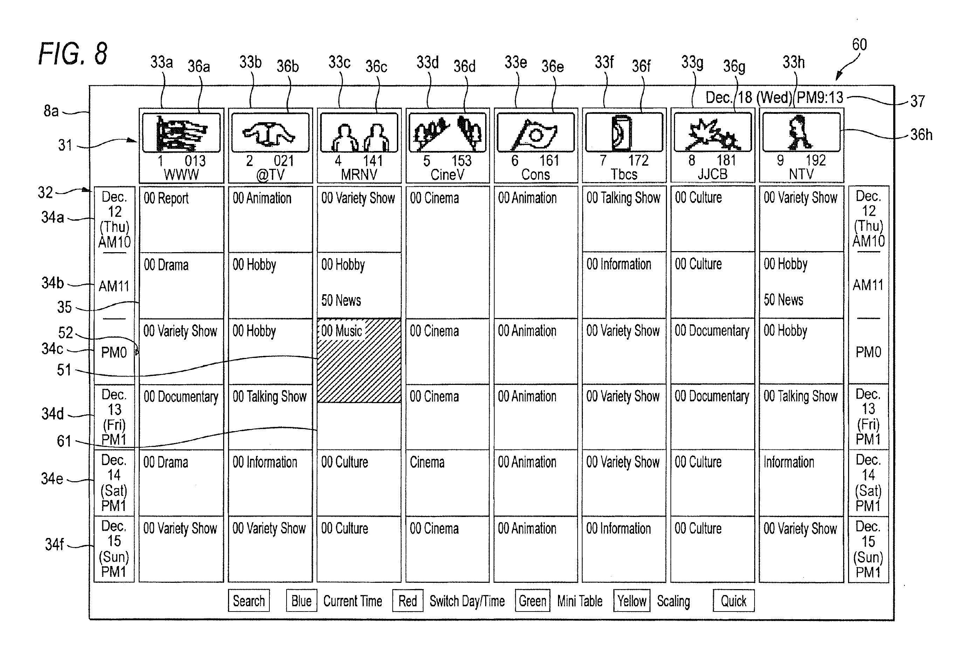

Fig. 8 illustrates Embodiment 4 of the recorded-program list. A block configuration of a digital broadcast receiver of Embodiment 4 is identical with that of the digital broadcast receiver 1 of Embodiment 1 shown in Fig. 1. The embodiment is different from Embodiment 1 shown in Fig. 3 in that, in a recorded-program list 60, when the user selects the program 51 by a cursor operation, not only the thumbnail of the thumbnail display portion 36c, but also the thumbnails of the thumbnail display portions 36a to 36h are switched to those of programs in the same time zone as the program 51. Namely, thumbnail images of programs in the designated time zone on the time axis are displayed. The thumbnails of all programs which are recorded in the same past time zone are displayed, thereby causing the user to be more conscious that the user is in virtual date and time.

In the recorded-program list 60, when the designated program is moved in the direction of the time axis (the vertical direction) by a cursor operation, the thumbnails are continuously switched over in accordance with the vertical movement. When a program 61 is selected, for example, thumbnails of programs in the time zone of the time display portion 34d are displayed for the respective channels. It is very convenient for the user to check pars of the other programs of the same time zone.

### (Embodiment 5)

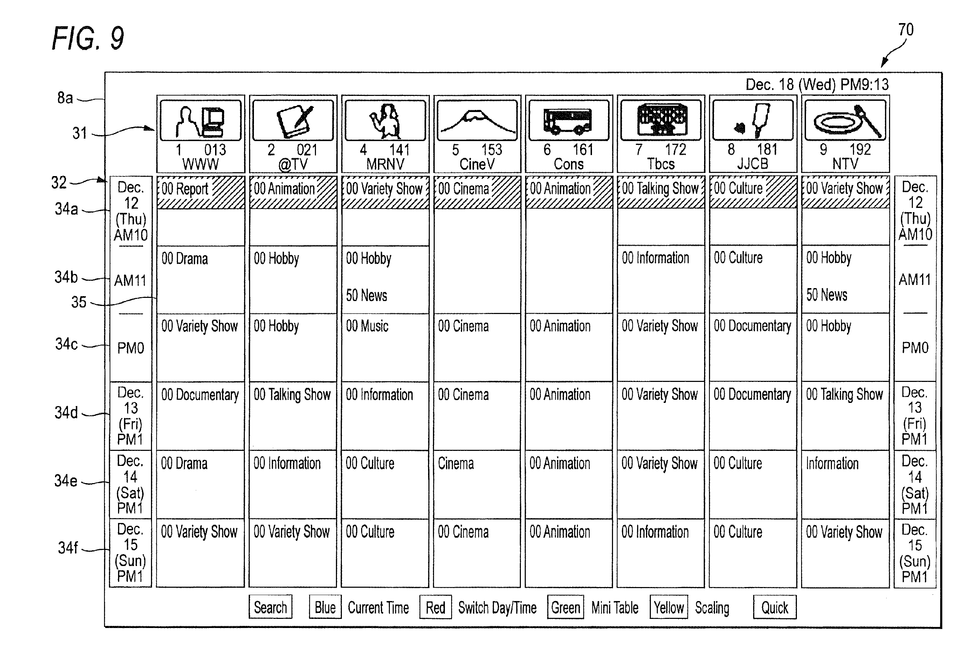

Fig. 9 illustrates Embodiment 5 of the recorded-program list. A block configuration of a digital broadcast receiver of Embodiment 5 is identical with that of the digital broadcast receiver 1 of Embodiment 1 shown in Fig. 1. The controlling portion 11 automatically erases recorded programs of plural channels in the oldest time zone in order that the storage amount does not exceed the storage capacity of the video recording device 16 or the external recording device 18. In a recorded-program list 70, the portions of programs in the course of erasing are displayed in a different way. As shown in Fig. 9, when the recorded portions in the time zone of the time display portion 34a are being erased, for example, the color of the erased parts (hatched parts) is differentiated from the color of the surrounding, to indicate that the parts are erased. In Fig. 9, a substantially half in the time zone is erased. According to such a display, the user can be easily aware of the programs being erased.

### (Embodiment 6)

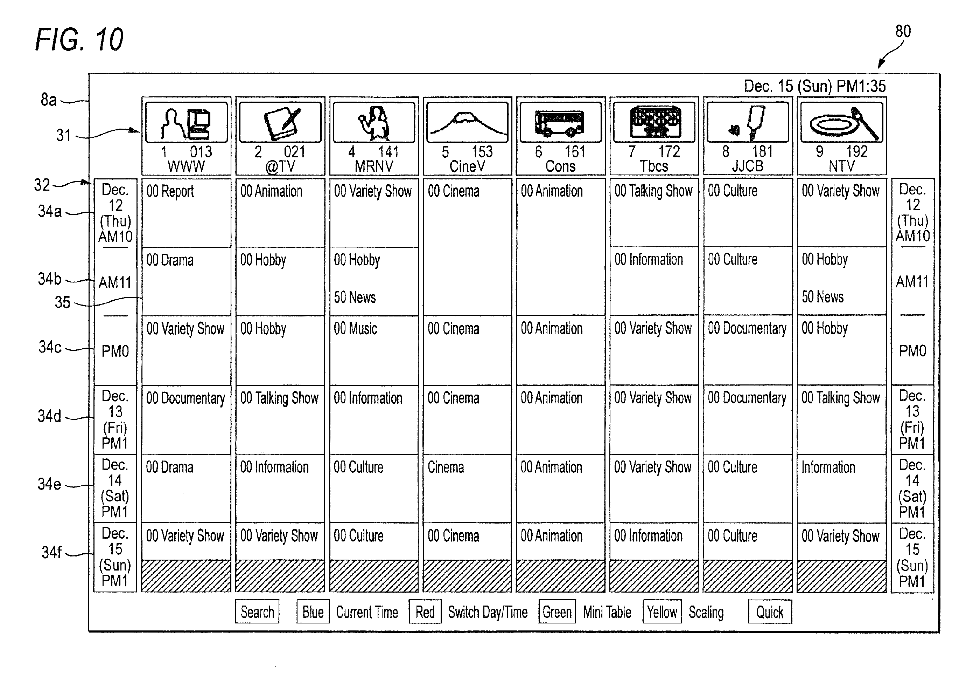

Fig. 10 illustrates Embodiment 6 of the recorded-program list. A block configuration of a digital broadcast receiver of Embodiment 6 is identical with that of the digital broadcast receiver 1 of Embodiment 1 shown in Fig. 1. In a recorded-program list 80, when plural programs in a time zone which is in the course of recording are displayed, the manner of displaying unrecorded parts of the programs is changed. In the recorded-program list 80, unrecorded parts of the programs are displayed in a different way. As shown in Fig. 10, when a part of a recording portion in the time zone of the time display portion 34f has not yet been recorded, for example, the color of the unrecorded parts (hatched parts) is differentiated from the color of the surrounding, to indicate that the parts are unrecorded. In Fig. 10, a substantially half of the recording in the time zone is unrecorded. According to such a display, the user can be easily aware of the programs being recorded.

### (Embodiment 7)

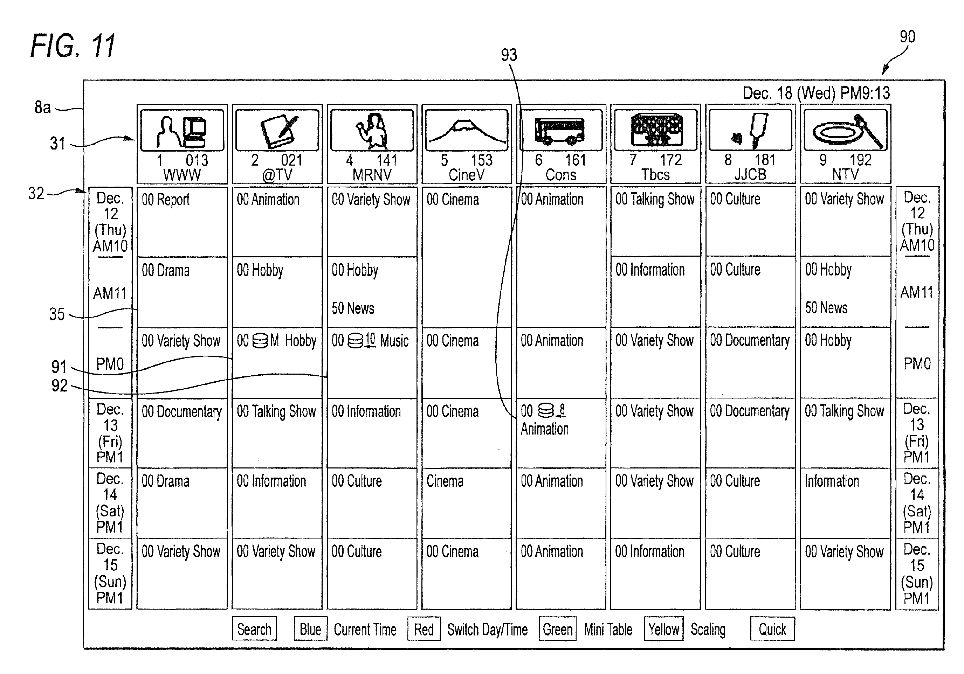

Fig. 11 illustrates Embodiment 7 of the recorded-program list. A block configuration of a digital broadcast receiver of Embodiment 7 is identical with that of the digital broadcast receiver 1 of Embodiment 1 shown in Fig. 1. The process for copying or moving a program recorded in the HDD or SSD of the video recording device 16 or the external recording device 18 to another video recording device or external recording device is referred to as "archive". The "archived program" may be restricted from being reproduced from a recorded-program list 90 or from being further archived. Therefore, by differentiating the archived program from other recording programs, the convenience of the user is improved.

In Fig. 11, in a program 91 in the program display portion 35, the fact that the program has been archived and the contents have been moved is indicated. In a program 92, the fact that the program has been archived and the program is a program of "dubbing 10" is indicated. In a program 93, the fact that the program has been archived and the archive can be performed further eight times is indicated.

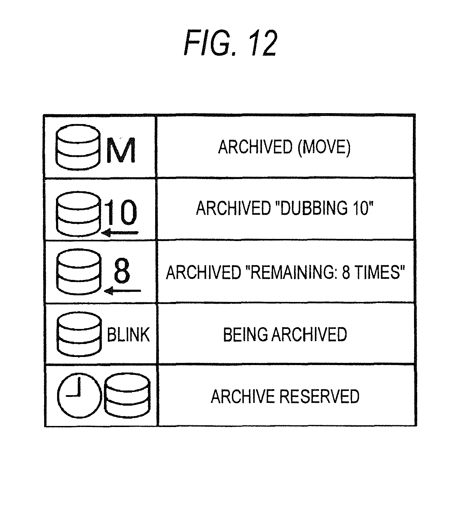

Fig. 12 exemplarily illustrates a mark for indicating the "archive". For example, a disk mark may be set to indicate the archive. The disk mark added with the character M indicates that the relevant program has been archived and moved. The disk mark with the numerals 10 and an arrow indicates that the relevant program has been archived and is a program of dubbing 10. The disk mark with the numeral 8 and an arrow indicates that the relevant program has been archived and the archive can be performed further eight times. When the disk mark blinks, the fact that the relevant program is being archived is indicated. The disk mark with a clock mark indicates that the relevant program is reserved for archive. When a reservation of archive is used, in a case where a storage capacity of the video recording device becomes full, a reserved program is copied/moved to another storage device. Basically, the recorded programs are erased in the order of the recorded time from oldest to newest. By using the reservation of archive, the reserved program is prevented from being inadvertently erased when the storage capacity of the video recording device is full.

The mark is not restricted to the disk mark, and may be arbitrarily set. The mark indicating that a program is being archived may be displayed by changing the color of the mark, or periodically changing the color of the mark, in place of blinking. The mark indicating archive reservation is not restricted to the clock mark, and may be another appropriate mark.

### (Embodiment 8)

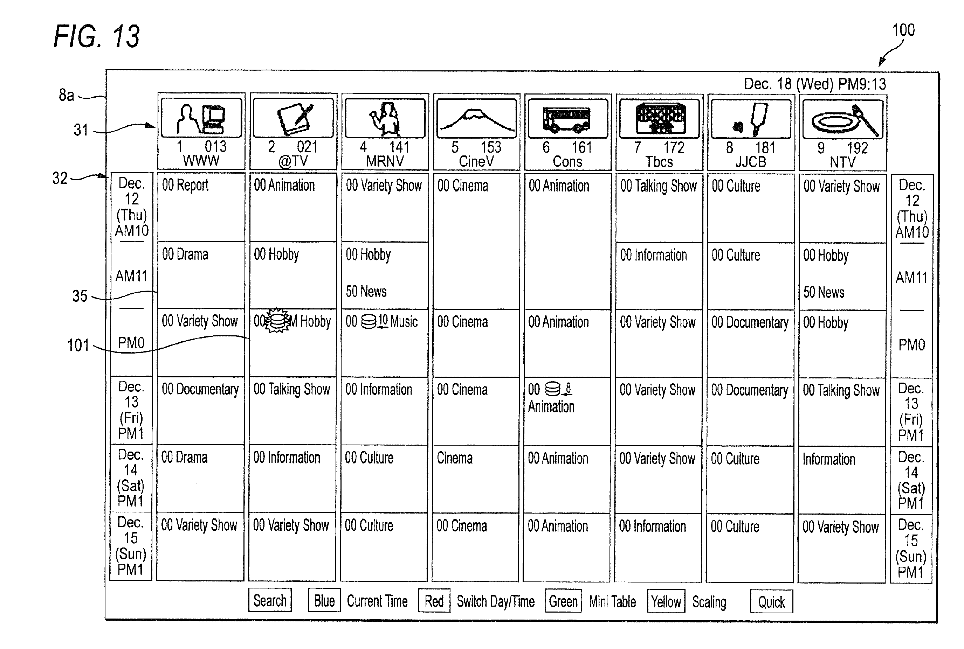

Fig. 13 illustrates Embodiment 8 of the recorded-program list. A block configuration of a digital broadcast receiver of Embodiment 8 is identical with that of the digital broadcast receiver 1 of Embodiment 1 shown in Fig. 1. The "program being archived" may be restricted from being reproduced from a recorded-program list 100 or from being duplicately archived. Therefore, by differentiating such program from other programs, the convenience of the user is improved.

In Fig. 13, with respect to a program 101 in the program display portion 35, a disk mark blinks to indicate that the program is being archived. The mark indicating that a program is being archived may be displayed by changing the color of the mark, or periodically changing the color of the mark, in place of blinking.

### (Embodiment 9)

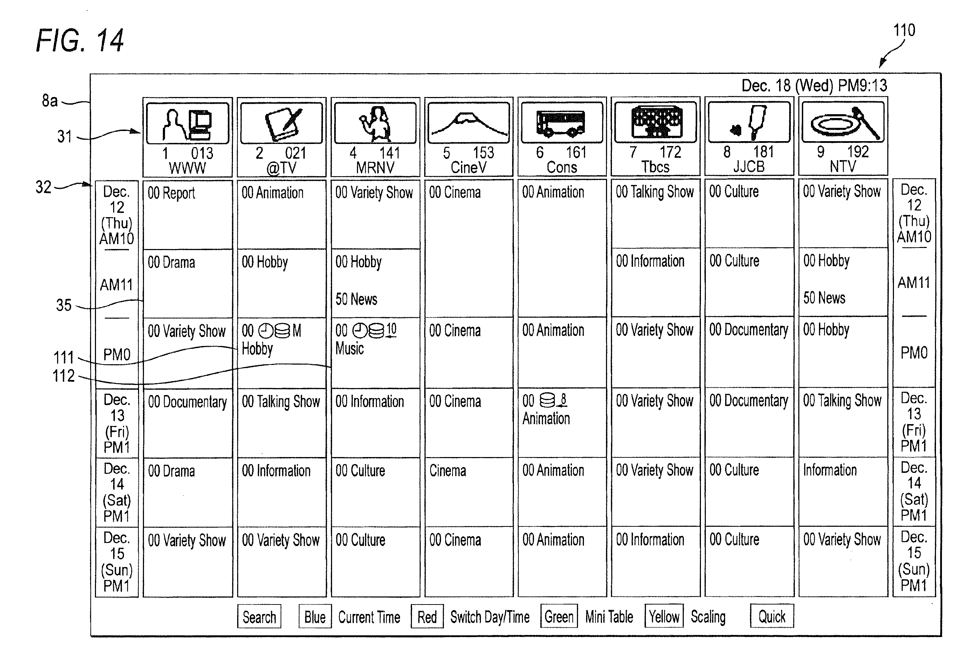

Fig. 14 illustrates Embodiment 9 of the recorded-program list. A block configuration of a digital broadcast receiver of Embodiment 9 is identical with that of the digital broadcast receiver 1 of Embodiment 1 shown in Fig. 1. A "program scheduled to be archived" may be restricted from being reproduced from a recorded-program list 110 or from being duplicately archived. Therefore, by differentiating such program from other programs, the convenience of the user is improved.

In Fig. 14, with respect to a program 111 in the program display portion 35, a clock mark and a disk mark are juxtaposedly displayed to indicate that the program is scheduled to be archived. Also, with respect to a program 112, a clock mark and a disk mark are juxtaposedly displayed to indicate that the program is scheduled to be archived. The mark indicating archive reservation is not restricted to the clock mark, and may be another appropriate mark.

As described above, in the recorded-program list, an "archived program (program having been archived)", a "program being archived" and a "program scheduled to be archived" are indicated for each program so that the user can easily recognize the situation and so that the user can previously know restrictions in such programs.

### (Embodiment 10)

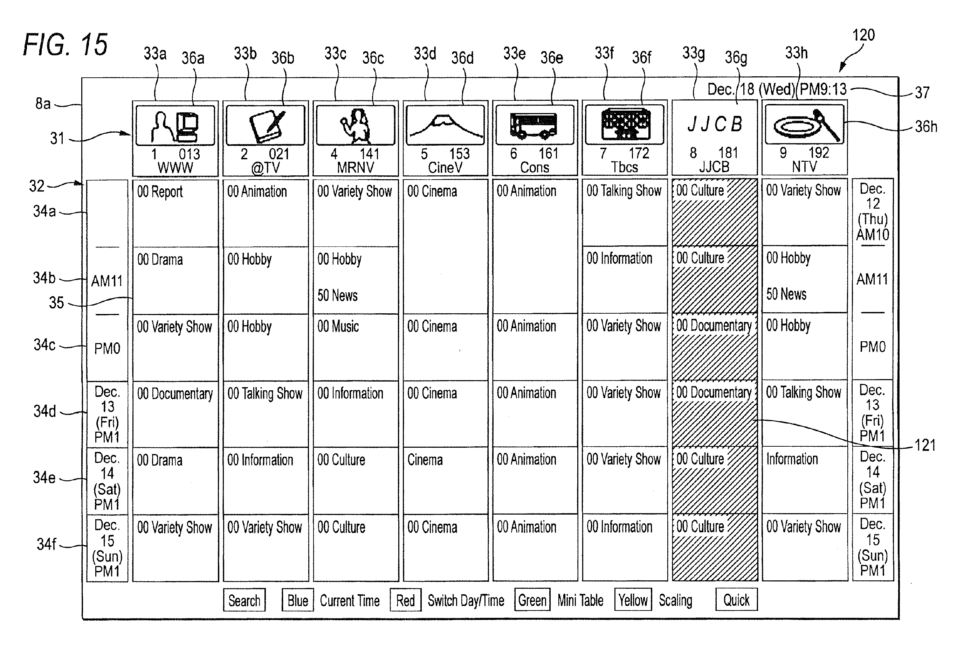

Figs. 15 to 17 illustrate Embodiment 10 of the recorded-program list. A block configuration of a digital broadcast receiver of Embodiment 10 is identical with that of the digital broadcast receiver 1 of Embodiment 1 shown in Fig. 1. In Figs. 15 to 17, portions identical with those of Fig. 3 are denoted by the same reference numerals. In Embodiment 10, record designation is performed on a channel basis.

Referring to Figs. 15 to 17, the video recording device 16 performs "continuous recording" to (simultaneously) record programs of at least one record-designated channel for a record-designated time zone. A recorded-program list 120 has a channel axis and a time axis, and displays past recorded programs in the continuous recording. In the recorded-program list, also channels not to be recorded are displayed in a similar order and width as an electronic program guide (EPG) of present/future programs, and, in the display, the area of a channel (non-record-designated channel) which is not designated as a record object is emphasized by an emphasizer so as to be distinguishable from that of a channel (record-designated channel) which is designated as a record object.

Hereinafter, the emphasizer in Figs. 15 to 17 will be described.

Fig. 15 shows an example of the emphasizer in Embodiment 10 of the recorded-program list.

The emphasizer shown in Fig. 15 displays an area which is not designated as a record object, in a dark state in which the brightness is lowered with respect to an area which is designated as a record object, or in a see-through display in which characters and the like indicating programs are displayed in a see-through manner. In the program display portion 35 in Fig. 15, an area 121 of a non-record-designated channel 8 is displayed in a hatched manner, and the thumbnail display portion 36g of the channel 8 is not displayed as a thumbnail, but by a logo of the broadcast station.

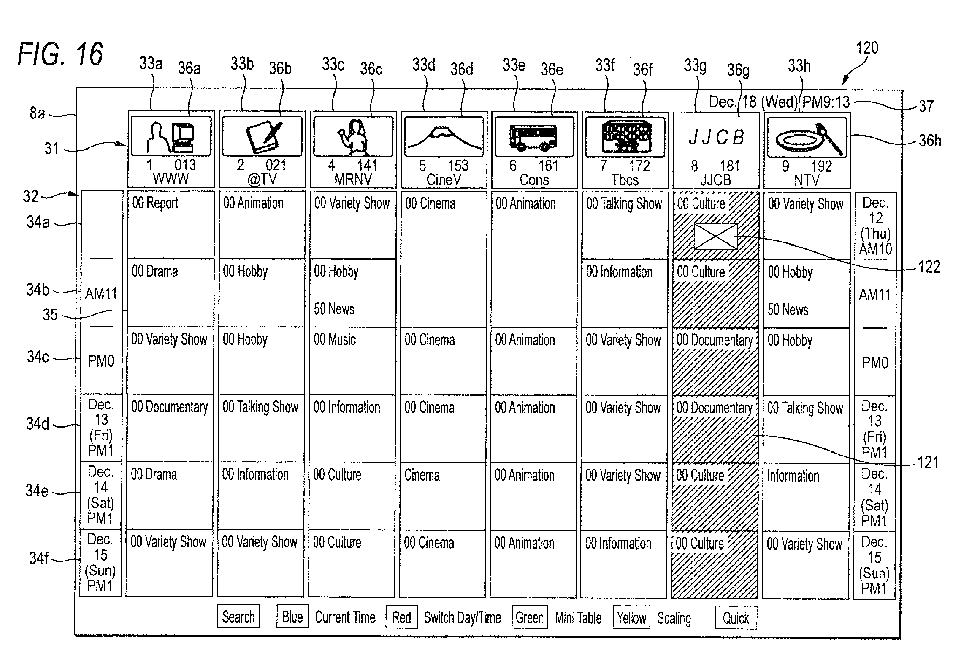

Fig. 16 shows another example of the emphasizer in Embodiment 10 of the recorded-program list.

The emphasizer shown in Fig. 16 displays the area by an icon 122 indicating that the area is not designated as a record object. In Fig. 16, similarly with Fig. 15, the area 121 of the non-record-designated channel 8 is displayed in a hatched manner, and the thumbnail display portion 36g of the channel 8 is not displayed as a thumbnail, but by a logo of the broadcast station.

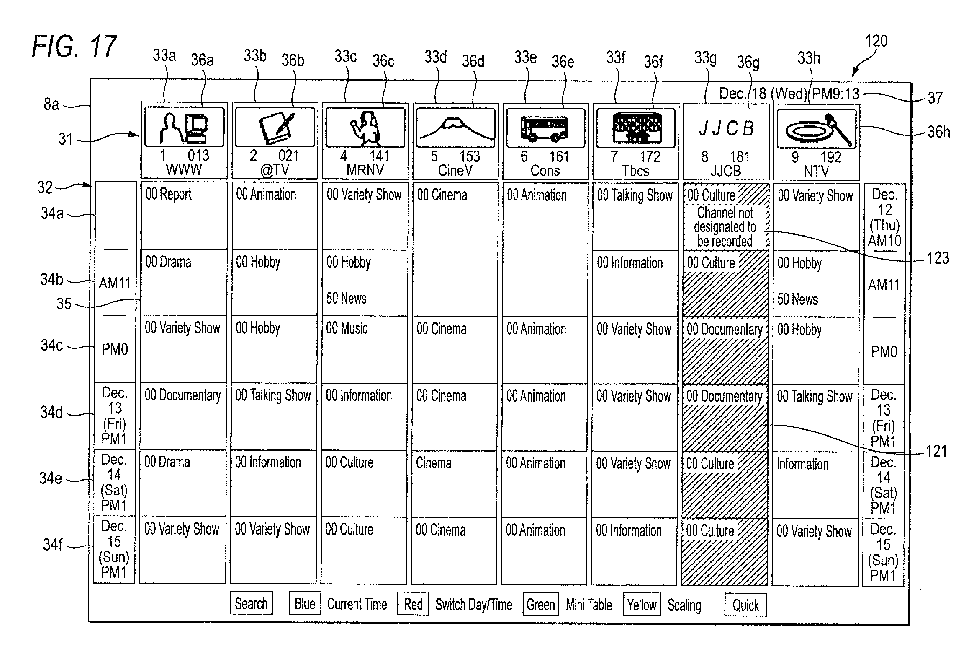

Fig. 17 shows a further example of the emphasizer in Embodiment 10 of the recorded-program list.

The emphasizer shown in Fig. 17 displays the area by characters 123 indicating that the area is a channel which is not designated to be recorded. In Fig. 17, similarly with Fig. 15, the area 121 of the non-record-designated channel 8 is displayed in a hatched manner, and the thumbnail display portion 36g of the channel 8 is not displayed as a thumbnail, but by a logo of the broadcast station.

### (Embodiment 11)

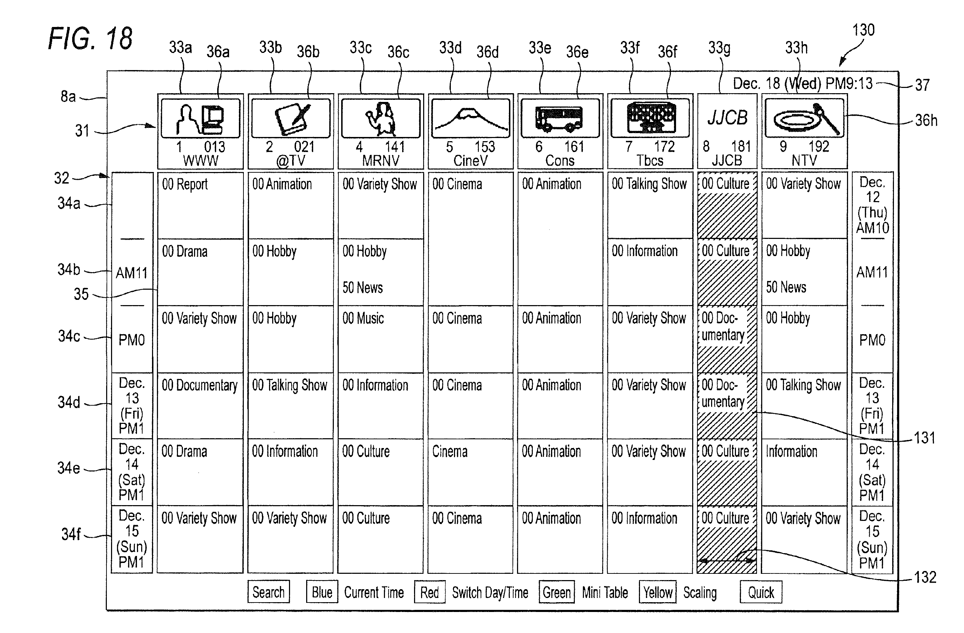

Fig. 18 illustrates. Embodiment 11 of the recorded-program list. A block configuration of a digital broadcast receiver of Embodiment 11 is identical with that of the digital broadcast receiver 1 of Embodiment 1 shown in Fig. 1. In Fig. 18, portions identical with those of Fig. 3 are denoted by the same reference numerals.

Referring to Fig. 18, the video recording device 16 performs "continuous recording" to (simultaneously) record programs of at least one record-designated channel for a record-designated time zone. A recorded-program list 130 has a channel axis and a time axis, and displays past recorded programs in the continuous recording. In the recorded-program list, also all channels which are not a record object are displayed in a similar order as an electronic program guide (EPG) of present/future programs, but the width 132 of an area 131 in the direction of the channel axis is compressed to, for example, one half, thereby emphasizing that the area is not designated as a record object. In the program display portion 35 in Fig. 18, similarly with Fig. 15, the area 131 of the non-record-designated channel 8 is displayed in a hatched manner, and the thumbnail display portion 36g of the channel 8 is not displayed as a thumbnail, but by a logo of the broadcast station.

### (Embodiment 12)

Embodiment 12 of the recorded-program list is applied to, for example, Figs. 15 to 17. A block configuration of a digital broadcast receiver of Embodiment 12 is identical with that of the digital broadcast receiver 1 of Embodiment 1 shown in Fig. 1.

In any one of Figs. 15 to 17, when a cursor located on the recorded-program list 120 is moved in the channel axis 31, selection of a program to be recorded is performed in the following manner. In the area 121 of a channel (in the figure, channel 8) which is not designated as a record object, focusing is not conducted by a cursor operation, and a cursor (not shown) is caused to skip, so that selection of a program to be recorded is disabled. In the area (the area in the program display portion 35 other than the channel area 121) in a channel which is a record object, by contrast, the cursor can select a program to be recorded. Usually, the cursor can be moved by gradually advancing a reversed display of the cursor location in programs. The cursor operation may also be applied to Embodiment 11 of Fig. 18.

In the embodiments of Figs. 15 to 18, when the cursor is moved in the channel axis 31 in selection of a program to be recorded, therefore, the cursor can be moved while skipping the channel area 121 or 131 which is not designated as a record object, and hence the operability of the cursor can be improved.

### (Embodiment 13)

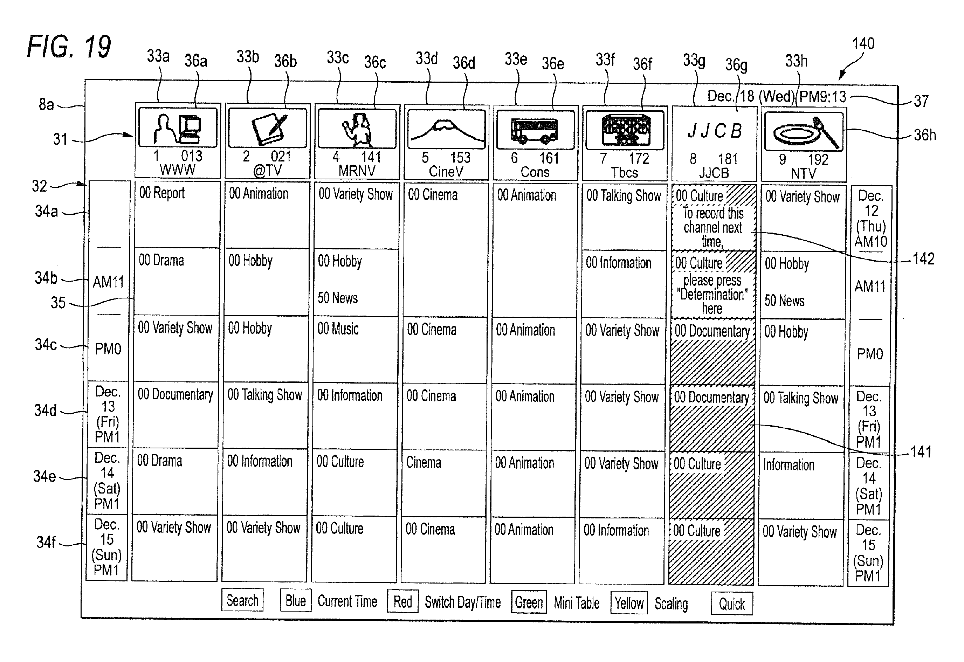

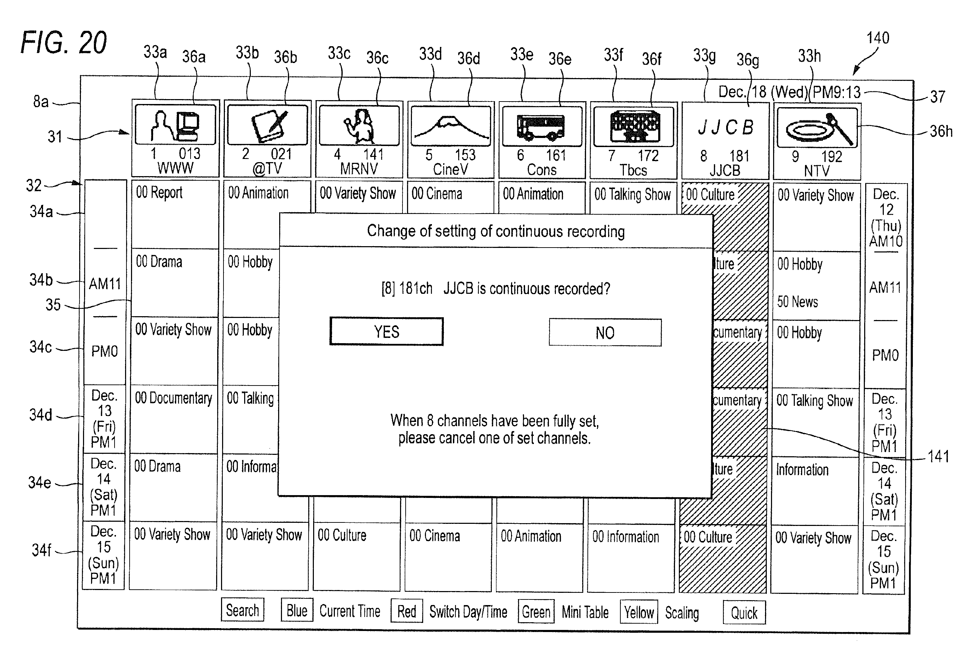

Figs. 19 and 20 illustrate Embodiment 13 of the recorded-program list.

Fig. 19 shows a recorded-program list, and Fig. 20 shows an operation screen to change record setting of a non-record-designated channel.

In Fig. 19, when the cursor is moved onto a recorded-program list 140 in the channel axis, focusing can be performed by the cursor operation in an area 141 of a channel (for example, channel 8 in the program display portion 35) which is not designated as a record object, and setting can be changed so that the non-record-designated channel is added to record objects. In Embodiment 13, in the non-record-designated channel area 141, a character display 142 of "When this channel is to be recorded next time, press determination button here" is performed, so that the user can know that a setting change to a record object is enabled.

In the case where, on the recorded-program list 140 of Fig. 19, the cursor is moved in the channel axis to enter the non-record-designated channel area 141 (the hatched portion in the figure), the cursor movement is stopped at the position (i.e., focusing is performed), and a determination button of the operation device 20 such as a remote controller is pressed. Then, an operation screen for changing setting of continuous recording, such as shown in Fig. 20 is displayed, and, with respect to a non-record-designated channel 8, setting change whether the channel is added to objects of continuous recording or not is enabled.

In the embodiment, as compared with Embodiment 12, the cursor operation produces an opposite action. Namely, the cursor can be focused on the non-record-designated channel area 141, without skipping it. According to the configuration, in the operation screen of Fig. 20, setting of a channel can be changed from a non-record object to a record object, through the operation screen of Fig. 20.

### (Embodiment 14)

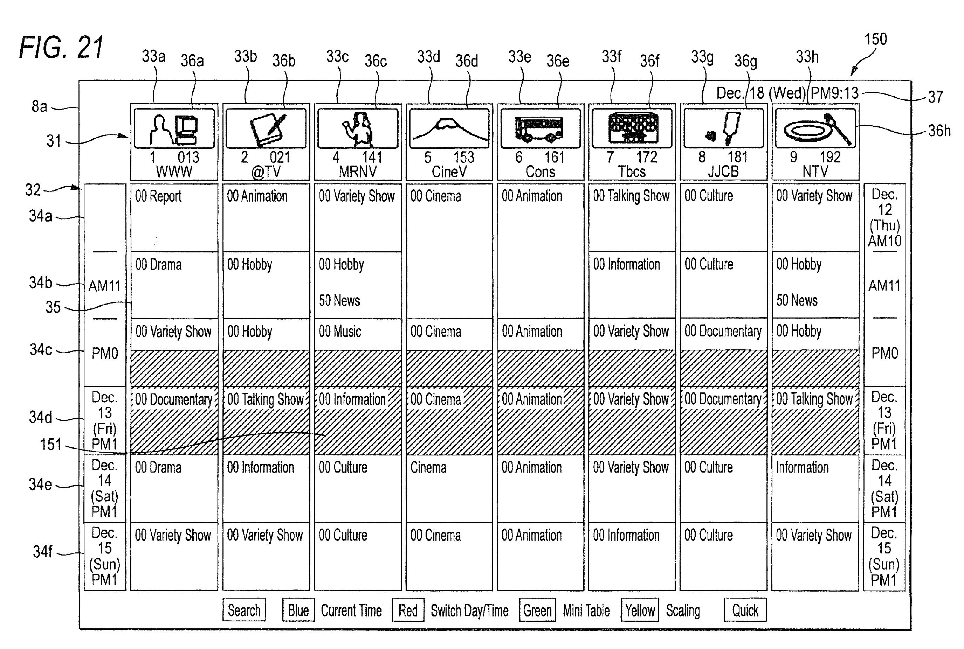

Figs. 21 to 23 illustrate Embodiment 14 of the recorded-program list. A block configuration of a digital broadcast receiver of Embodiment 14 is identical with that of the digital broadcast receiver 1 of Embodiment 1 shown in Fig. 1. In Figs. 21 to 23, portions identical with those of Fig. 3 are denoted by the same reference numerals. In Embodiment 14, record designation is performed on a time zone basis.

Referring to Figs. 21 to 23, the video recording device 16 performs continuous recording" to (simultaneously) record programs of at least one record-designated channel for a record-designated time zone. A recorded-program list 150 has a channel axis and a time axis, and displays past recorded programs in the continuous recording. In the recorded-program list, also all time zones which are not designated to be recorded are displayed in a similar order and width as an electronic program guide (EPG) of present/future programs, and an area 151 of time zones which are not designated to be recorded are emphasized by an emphasizer so as to be distinguishable from that of time zones which are designated to be recorded.

Fig. 21 shows an example of the emphasizer in Embodiment 14 of the recorded-program list.

The emphasizer shown in Fig. 21 displays an area which is not designated as a record object, in a dark state in which the brightness is lowered with respect to an area which is designated as a record object, or in a see-through display in which characters and the like indicating programs are displayed in a see-through manner. In the program display portion 35 in Fig. 21, the area 151 of the non-record-designated time zone is displayed in a hatched manner.

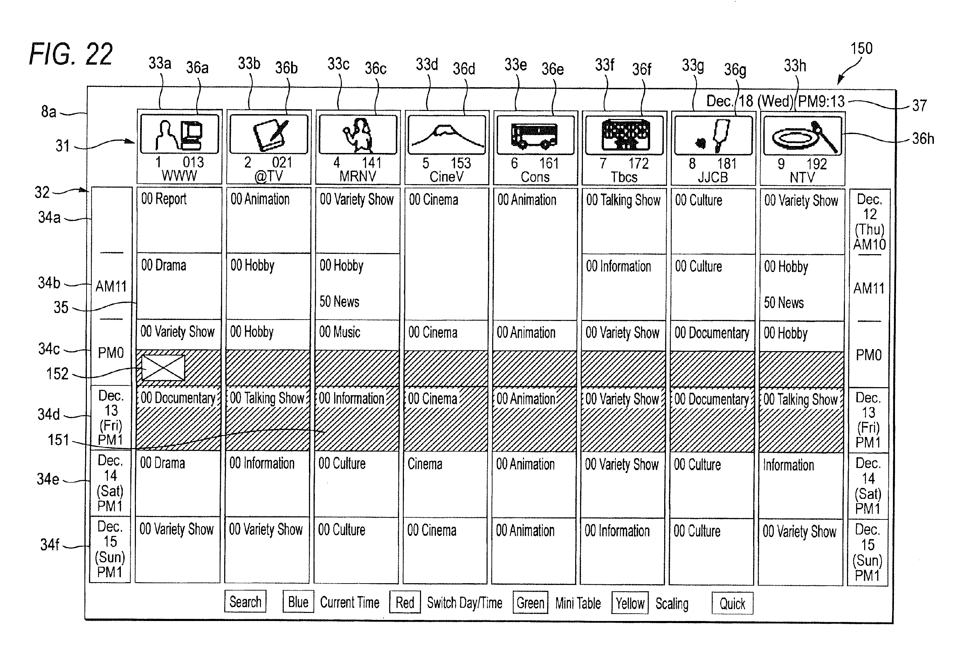

Fig. 22 shows another example of the emphasizer in Embodiment 14 of the recorded-program list.

The emphasizer shown in Fig. 22 displays the area by an icon 152 indicating that the area is not designated as a record object. In Fig. 22, similarly with Fig. 21, the area 151 of the non-record-designated time zone is displayed in a hatched manner.

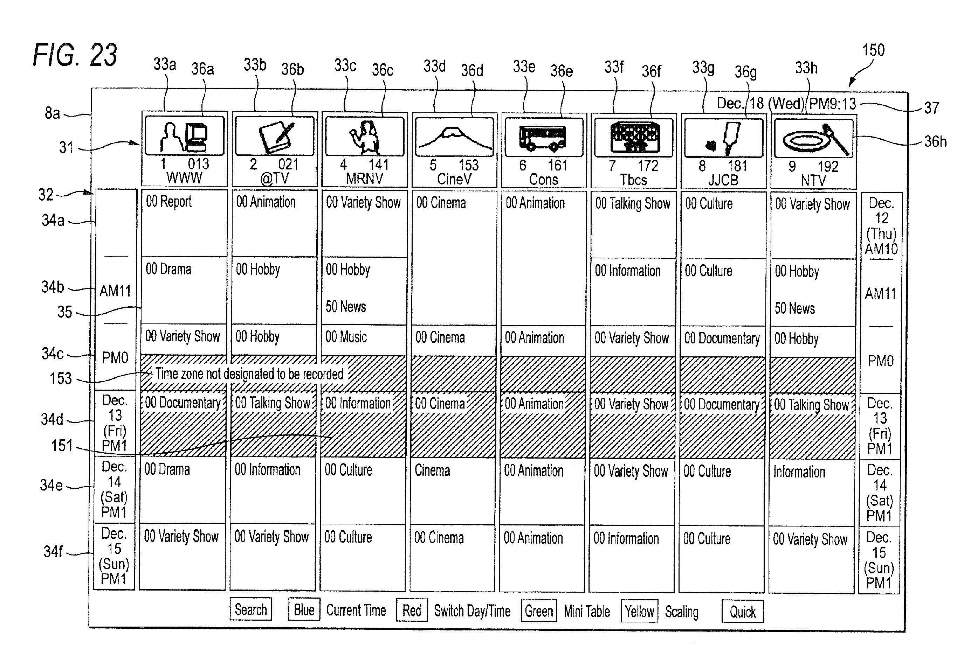

Fig. 23 shows a further example of the emphasizer in Embodiment 14 of the recorded-program list.

The emphasizer shown in Fig. 23 displays the area by characters 153 indicating that the area is not designated to be recorded. In Fig. 23, similarly with Fig. 21, the area 151 of the non-record-designated time zone is displayed in a hatched manner.

### (Embodiment 15)

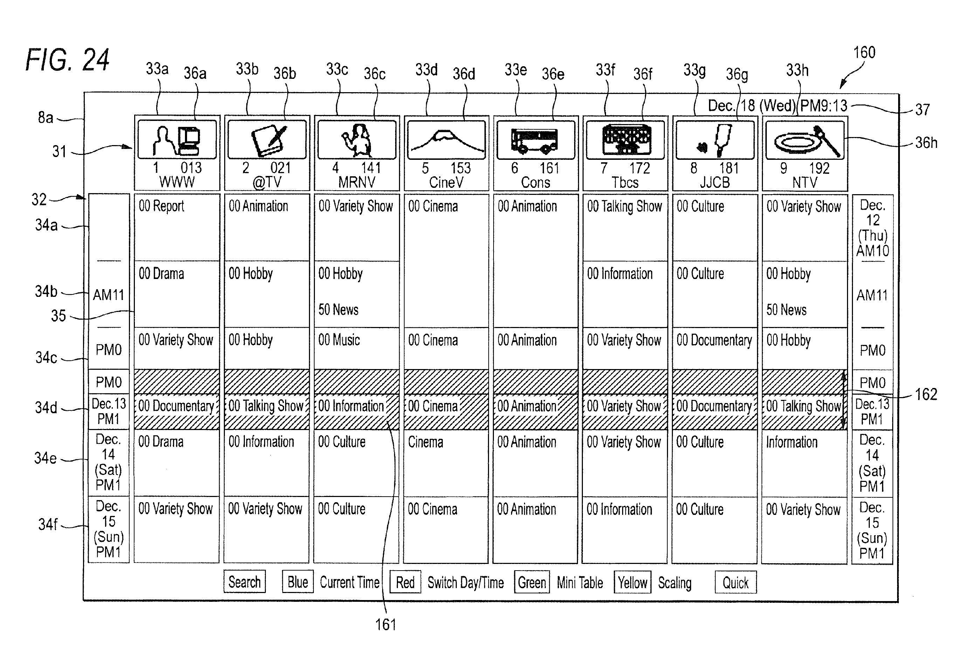

Fig. 24 illustrates Embodiment 15 of the recorded-program list. A block configuration of a digital broadcast receiver of Embodiment 15 is identical with that of the digital broadcast receiver 1 of Embodiment 1 shown in Fig. 1. In Fig. 24, portions identical with those of Fig. 3 are denoted by the same reference numerals.

Referring to Fig. 24, the video recording device 16 performs "continuous recording" to (simultaneously) record programs of at least one record-designated channel for a record-designated time zone. A recorded-program list 160 has a channel axis and a time axis, and displays past recorded programs in the continuous recording. In the recorded-program list, also all time zones which are not a record object are displayed in a similar order as an electronic program guide (EPG) of present/future programs, but the width 162 of an area 161 in the direction of the time axis is compressed to, for example, one half, thereby emphasizing that the time zones are not designated as a record object. In the program display portion 35 in Fig. 24, similarly with Fig. 21, the area 161 of the non-record-designated time zone is displayed in a hatched manner.

### (Embodiment 16)

Embodiment 16 of the recorded-program list is applied to, for example, Figs. 21 to 23. A block configuration of a digital broadcast receiver of Embodiment 16 is identical with that of the digital broadcast receiver 1 of Embodiment 1 shown in Fig. 1.

In any one of Figs. 21 to 23, when a cursor located on the recorded-program list 150 is moved in the time axis 32, selection of a program to be recorded is performed in the following manner. In the area 151 of a time zone which is not designated as a record object, focusing is not conducted by a cursor operation, and a cursor (not shown) is caused to skip, so that selection of a program to be recorded is disabled. In the area (the area in the program display portion 35 other than the time zone area 151) in a record-designated time zone, by contrast, the cursor can select a program to be recorded. Usually, the cursor can be moved by shifting a reversed display of the cursor location in programs. The cursor operation may also be applied to Embodiment 15 of Fig. 24.

In the embodiments of Figs. 21 to 24, when the cursor is moved in the time axis 32 in selection of a program to be recorded, therefore, the cursor can be moved while skipping the area 151 or 161 of a time zone which is not designated as a record object, and hence the operability of the cursor can be improved.

### (Embodiment 17)

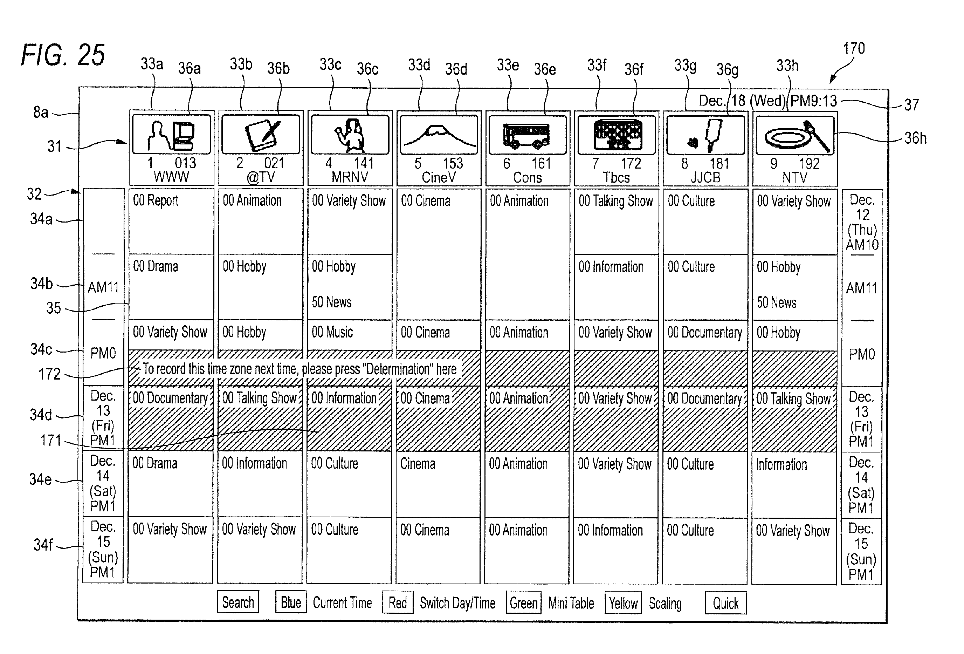

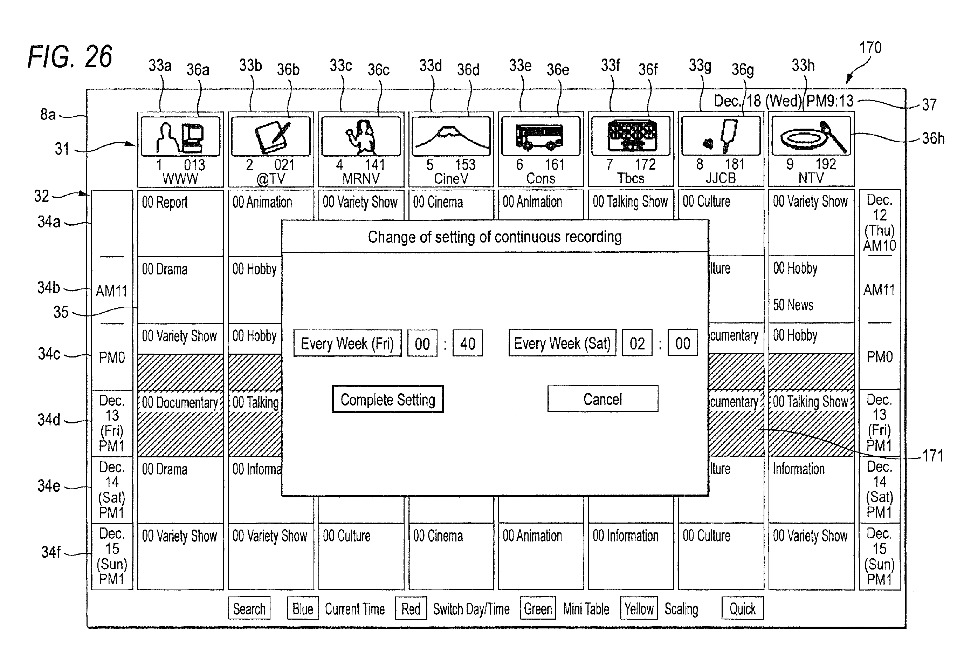

Figs. 25 and 26 illustrate Embodiment 17 of the recorded-program list.

Fig. 25 shows a recorded-program list, and Fig. 26 shows an operation screen to change record setting of a non-record-designated time zone. A block configuration of a digital broadcast receiver of Embodiment 17 is identical with that of the digital broadcast receiver 1 of Embodiment 1 shown in Fig. 1.

In Fig. 25, when the cursor is moved onto a recorded-program list 170 in the time axis, focusing can be performed by the cursor operation in a time zone 171 which is not designated as a record object, and setting can be changed so that the non-record-designated time zone 171 is added to record objects. In Embodiment 17, in the non-record-designated time zone 171, a character display 172 of "When this time zone is to be recorded next time, press determination button here" is performed, so that the user can know that a setting change to a record object is enabled.

In the case where, on the recorded-program list 170 of Fig. 25, the cursor is moved in the time axis to enter the non-record-designated time zone 171 (the hatched portion in the figure), the cursor movement is stopped at the position (i.e., focusing is performed), and the determination button of the operation device 20 such as a remote controller is pressed. Then, an operation screen for changing setting of continuous recording, such as shown in Fig. 26 is displayed, and, with respect to the non-record-designated time zone, setting change whether the time zone is added to objects of continuous recording or not is enabled.

In the embodiment, as compared with Embodiment 16, the cursor operation produces an opposite action. Namely, the cursor can be focused on the non-record-designated channel area 171, without skipping it. According to the configuration, in the operation screen of Fig. 26, setting of a time zone can be changed from a non-record-designated time zone to a record-designated time zone, through the operation screen of Fig. 26.

### (Embodiment 18)

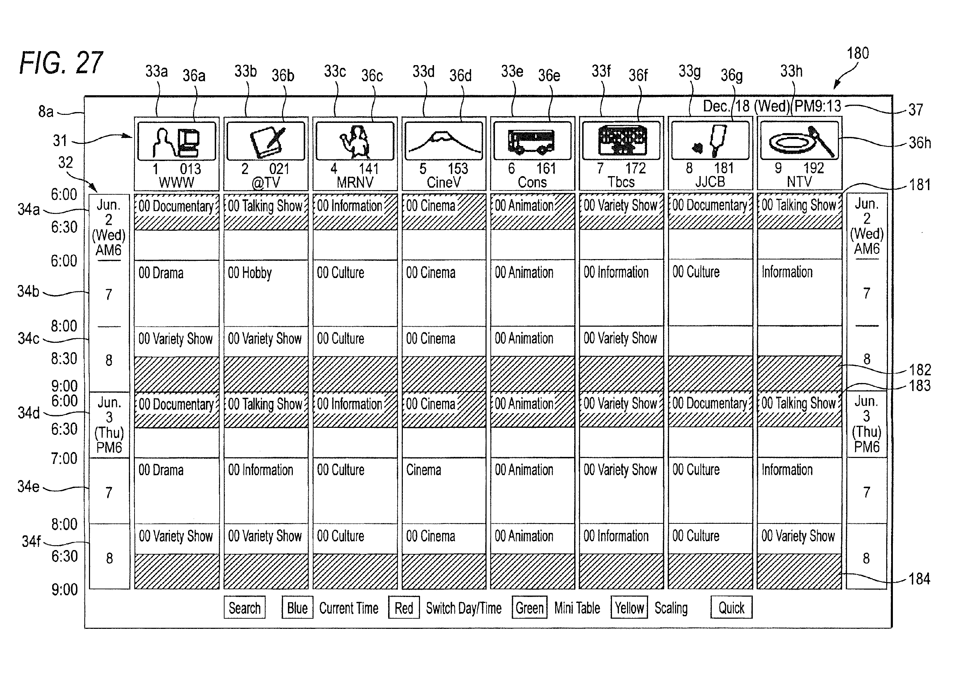

Fig. 27 illustrates Embodiment 18 of the recorded-program list. A block configuration of a digital broadcast receiver of Embodiment 18 is identical with that of the digital broadcast receiver 1 of Embodiment 1 shown in Fig. 1. In Fig. 27, portions identical with those of Fig. 3 are denoted by the same reference numerals.

Referring to Fig. 27, the video recording device 16 performs "continuous recording" to (simultaneously) record programs of at least one record-designated channel for a record-designated time zone. A recorded-program list 180 has a channel axis and a time axis, and displays past recorded programs in the continuous recording. In the recorded-program list, portions in which time zones which are not designated to be recorded are partitioned in an o'clock-hour basis are deleted and set to be undisplayed, and remaining portions which are produced as a result of the deletion and undisplaying due to the partition, and which are shorter than the one hour range are emphasized as areas other than the record-designated time, whereby record-designated areas other than the non-record-designated areas are made distinguishable. As a emphasizing method, for example, portions of areas other than the record-designated time may be darkened as compared with areas of record-designated time zones, or the portions may be displayed in a see-through display.

It is assumed that the same time zone is repeatedly recorded every day, an example case. For example, it is assumed that plural channels are continuously recorded every day while recording of the time zones from 6:30 A.M. to 8:30 A.M. of June 2 (Wed) and June 3 (Thu) is designated. In each of the days in which recording is performed, all the time zones other than that from 6:30 A.M. to 8:30 A.M. are not designated to be recorded. In June 2 (Wed) and June 3 (Thu), the time zone from 8:30 A.M. to 6:30 A.M. of the next day is a non-record-designated time zone. The portions which are obtained by partitioning the non-record-designated time zone in an o'clock-hour basis are deleted and set to be undisplayed, and plural record-designated time zones are continuous with each other. The remaining portions which are produced as a result of the deletion and undisplaying due to the partition, and which are shorter than the one hour range are emphasized as areas other than the record-designated time, whereby the time zones from 6:30 A.M. to 8:30 A.M. which are a record-designated time zone other than the non-record-designated time zones are made distinguishable. Namely, when the non-record-designated time zone from 8:30 A.M. to 6:30 A.M. of the next day is partitioned in an o'clock-hour basis, the time zone includes 21 hours from 9 A.M. to 6 A.M. of the next day. When this time zone is deleted, the remaining portions which are in the non-record-designated time zone, and which are shorter than one hour are a 30-minute portion 182 (hatched portion), a 30-minute portion 183 (hatched portion), a 30-minute portion 181 (hatched portion) in an upper end portion and a 30-minute portion 184 (hatched portion) in a lower end portion, in Fig. 27. The four hatched portions 181 to 184 are emphasized by the above-described emphasizing method.

Embodiment 18 is not restricted to the case where the recording is repeatedly performed at the same time zone for every day. The recording may be performed at the same time zone for every week, or at plural time zones in a specific one/plural day.

### (Embodiment 19)

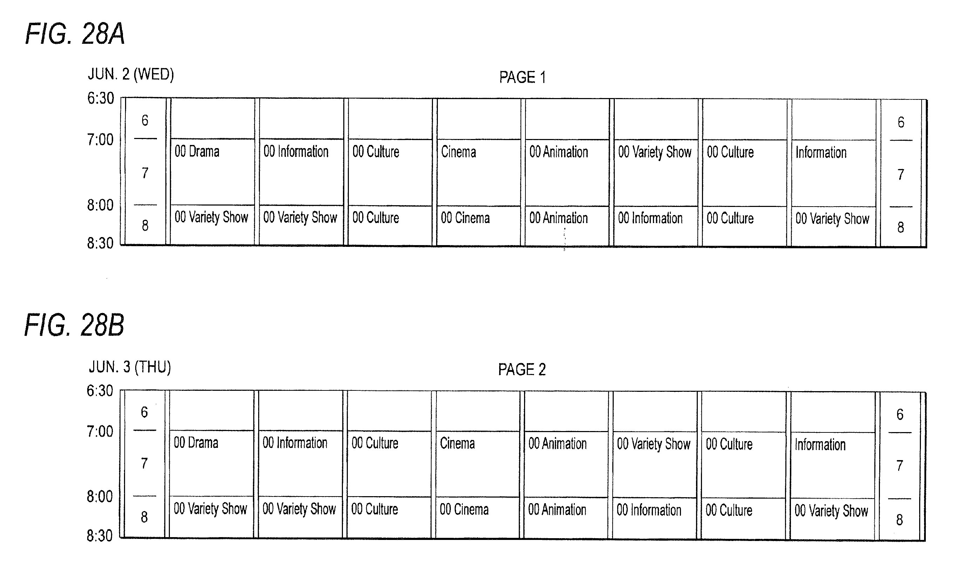

Fig. 28A and 28B illustrate Embodiment 19 of the recorded-program list. A block configuration of a digital broadcast receiver of Embodiment 19 is identical with that of the digital broadcast receiver 1 of Embodiment 1 shown in Fig. 1.

Referring to Fig. 28A and 28B, the video recording device 16 performs "continuous recording" to (simultaneously) record programs of at least one record-designated channel for a record-designated time zone. A plurality (two) of recorded-program lists shown in Fig. 28A and 28B have a channel axis extending in the lateral direction, and a time axis extending in the vertically direction, and display past recorded programs in the continuous recording. In the recorded-program lists, plural record-designated time zones are partitioned in a time zone basis to be formed as separate pages, and the record-designated time zones are displayed by switching the pages.

In Embodiment 19, a plurality (in Fig. 27, two) of recorded-program lists shown in, for example, the recorded-program list 180 in Embodiment 18 shown in Fig. 27 are partitioned in a time zone basis to be formed as separate pages, and the plural record-designated time zones are sequentially displayed by switching the pages. The page switching operation is performed by operating the cursor to a switching button or the like which is displayed on the screen. Figs. 28A and 28A show record-designated time zones which are displayed in different pages such as pages 1 and 2, or Fig. 28A shows a record-designated time zone from 6:30 A.M. of June 2 (Wed) to 8:30 A.M., and Fig. 28B shows a record-designated time zone from 6:30 A.M. of June 3 (Thu) to 8:30 A.M.

Similarly with Embodiment 18, also Embodiment 19 is not restricted to the case where the recording is repeatedly performed at the same time zone for every day. The recording may be performed at the same time zone for every week, or at plural time zones in a specific one/plural day.

In the general EPG, also non-record-designated channels or time zones are displayed as they are. According to above-described Embodiments 15 to 19, in a recorded-program list which is to display a recorded program, particularly when continuous recording is performed and a program list is prepared, it is emphasized that recording of a non-record-designated portion is not designated as a record object, whereby the fact that the portion has no recorded program is emphasized to the user, or the display width is compressed, whereby the fact that there is no recorded program is efficiently displayed. Moreover, a change in which record designation is changed by selecting a non-record-designated channel or time zone can be easily performed. When selection is performed on record-designated programs in the recorded-program list by a cursor operation, the cursor movement skips over a non-record-designated area, and hence the operability of the cursor can be improved. In a recorded-program list for a predetermined number of days, e.g., one day, the number of record-designated time zones is small or the time lengths of the time zones are short so that the record-designated area occupies a small portion in the recorded-program list, a non-record-designated area other than an area which is used for effectively emphasizing a record-designated time zone is omitted, whereby the selectivity of a recorded program can be improved. Further, only record-designated time zones are extracted, and plural record-designated time zones are formed as different pages, and selectively displayed by switching the pages, whereby the selectivity of a recorded program can be improved.

The invention is not restricted to the above-described embodiments as they are, and, in the stage of implementation, the invention can be embodied while the components are modified without departing the spirit of the invention. By appropriate combinations of plural components disclosed in the embodiments, various inventions can be configured. For example, some of all the components may be omitted, and the components in different embodiments may be combined.

Embodiments of the present invention include the following:
1. A digital broadcast receiver comprising:
   a video recorder configured to record, among a plurality of broadcast programs, subject programs based on record-designation information, the record-designation information designating (i) a plurality of channels and (ii) a plurality of different time zones; and
   a recorded-program list generator configured to generate a recorded-program list that only displays the subject programs among the plurality of broadcast programs.
2. The digital broadcast receiver of embodiment 1,
   wherein the recorded-program list has a channel axis and a time axis,
   wherein the different time zones of record-designation information includes a time discontinuous boundary, and
   wherein, in the recorded-program list, the time discontinuous boundary is differentiated in a display manner.
3. The digital broadcast receiver of embodiment 1 or 2,
   wherein the recorded-program list has a channel axis and a time axis,
   wherein the recorded-program list is configured to allow the user to designate a specific program to be reproduced, and
   wherein, in the recorded-program list, a mark is displayed on the time axis at a time zone corresponding to the specific program.
4. The digital broadcast receiver of one of embodiments 1 to 3,
   wherein the recorded-program list has a channel axis and a time axis
   wherein the recorded-program list is configured to allow the user to designate a specific time zone in the time axis, and
   wherein, in the recorded-program list, thumbnail images of programs corresponding to the specific time zone are displayed.
5. The digital broadcast receiver of one of embodiments 1 to 4,
   wherein the video recorder is configured to automatically erase a part of the subject programs which correspond to an oldest time zone so that a storage amount of the recorded subject programs is prevented from exceeding a storage capacity of the video recorder, and
   wherein, when the recorded-program list is displayed while erasing is performed, in the recorded-program list, programs being erased are differentiated in a display manner.
6. The digital broadcast receiver of one of embodiments 1 to 5, configured so that
   when the recorded-program list is displayed while recording is performed, in the recorded-program list, programs being recorded are differentiated in a display manner.
7. The digital broadcast receiver of one of embodiments 1 to 6,
   wherein the video recorder is configured to perform a continuous recording to record programs of at least one record-designated channel for a record-designated time zone,
   wherein the recorded-program list has a channel axis and a time axis, and displays past recorded programs in the continuous recording, also all channels which are not a record object are displayed in a similar order and width as an electronic program guide of present/future programs, and
   wherein an emphasizer is provided to emphasize an area of a non-record-designated channel to be distinguishable from an area of the record-designated channel.
8. The digital broadcast receiver of one of embodiments 1 to 7,
   wherein the video recorder is configured to perform a continuous recording to record programs of at least one record-designated channel for a record-designated time zone, and
   wherein the recorded-program list has a channel axis and a time axis, and displays past recorded programs in the continuous recording, and also all channels which are not a record object are displayed in a similar order as an electronic program guide of present/future programs, while emphasizing the non-record-designated channels by compressing a size thereof in a direction of the channel axis.
9. The digital broadcast receiver of one of embodiments 1 to 8, configured so that
   when a cursor is moved in a channel axis on the recorded-program list, in an area of a channel which is not designated as a record object, focusing is not conducted by a cursor operation, and a cursor is caused to skip, so that only a program of a record-designated channel is selectable.
10. The digital broadcast receiver of one of embodiments 1 to 8, configured so that
   when a cursor is moved in a channel axis on the recorded-program list, in an area of a channel which is not designated as a record object, focusing can be conducted by a cursor operation, and setting can be changed so that the non-record-designated channel is added to record objects.
11. The digital broadcast receiver of one of embodiments 1 to 10,
   wherein the video recorder is configured to perform a continuous recording to record programs of at least one record-designated channel for a record-designated time zone, wherein the recorded-program list has a channel axis and a time axis, and displays past recorded programs in the continuous recording, also all non-record-designated time zones are displayed in a similar order and width as an electronic program guide of present/future programs, and
   wherein an emphasizer is provided to emphasize an area of a non-record-designated time zone to be distinguishable from an area of the record-designated time zone.
12. The digital broadcast receiver of one of embodiments 1 to 11,
   wherein the video recorder is configured to perform a continuous recording to record programs of at least one record-designated channel for a record-designated time zone, and
   wherein the recorded-program list has a channel axis and a time axis, and displays past recorded programs in the continuous recording, and also all non-record-designated time zones are displayed in a similar order as an electronic program guide of present/future programs, while emphasizing the non-record-designated time zones by compressing a size thereof in a direction of the channel axis.
13. The digital broadcast receiver of one of embodiments 1 to 12,
   wherein the video recorder is configured to perform a continuous recording to record programs of at least one record-designated channel for a record-designated time zone, and
   wherein the recorded-program list has a channel axis and a time axis, and displays past recorded programs in the continuous recording, portions which are obtained by partitioning a non-record-designated time zone in an o'clock-hour basis are deleted and set to be undisplayed, a plurality of record-designated time zones are continuous with each other, and remaining portions which are produced as a result of the deletion and undisplaying due to the partition, and which are shorter than the one hour range are emphasized as areas other than a record-designated time, whereby the record-designated time zones are made distinguishable.
14. The digital broadcast receiver of one of embodiments 1 to 13,
   wherein the video recorder is configured to perform a continuous recording to record programs of at least one record-designated channel for a record-designated time zone, and
   wherein the recorded-program list has a channel axis and a time axis, and displays past recorded programs in the continuous recording, a plurality of record-designated time zones are partitioned in a time zone basis to be formed as separate pages, and the record-designated time zones are displayed by switching the pages.
15. The digital broadcast receiver of one of embodiments 1 to 14, configured so that
   when a cursor is moved in a time axis on the recorded-program list, in an area of a time zone which is not designated as a record object, focusing is not conducted by a cursor operation, and a cursor is caused to skip, so that only a program of a record-designated time zone is selectable.
16. The digital broadcast receiver of one of embodiments 1 to 15, configured so that
   when a cursor is moved in a time axis on the recorded-program list, in an area of a time zone which is not designated as a record object, focusing can be conducted by a cursor operation, and setting can be changed so that the non-record-designated time zone is added to record objects.
17. The digital broadcast receiver of embodiment 7 or 11,
   wherein the emphasizer is configured to display the non-record-designated area with respect to the record-designated area by adapting a dark display or a see-through display, or by using an icon or description indicating that the area is not designated as the record object.
18. A recorded-program display method comprising:
   recording, among a plurality of broadcast programs, subject programs based on record-designation information, the record-designation information designating (i) a plurality of channels and (ii) a plurality of different time zones;
      generating a recorded-program list that only displays the subject programs among the plurality of broadcast programs; and
      displaying the recorded-program list on a screen of a display device.

## Claims

1. A digital broadcast receiver (1) comprising a plurality of tuners (3) for continuous and simultaneous recording of a plurality of programs and a video recorder (16), and configured to record, by use of the video recorder (16) or an external recording device (18), among a plurality of broadcast programs, programs of a plurality of record-designated channels and a record-designated time zone,
the digital broadcast receiver further comprising a recorded-program list generator (22) configured to generate a recorded-program list displaying the programs of the record-designated channels and the record-designated time zone,
**characterized in that**, in the recorded-program list, programs being recorded are differentiated in a display manner.

2. The digital broadcast receiver (1) according to claim 1, wherein, in the recorded-program list, unrecorded parts of the programs being recorded are differentiated in a display manner.

3. The digital broadcast receiver (1) according to claim 2, wherein the color of the unrecorded parts is differentiated from the color of the surrounding.

4. The digital broadcast receiver (1) according to one of claims 1 to 3, wherein the recorded-program list generator (22) is configured to generate the recorded-program list to display the programs of only the record-designated channels and the record-designated time zone.

5. The digital broadcast receiver (1) according to one of claims 1 to 4, wherein the recorded-program list generator (22) is configured to generate the recorded-program list to display only programs having been recorded and the programs being recorded.

6. The digital broadcast receiver (1) according to one of claims 1 to 5, further comprising a display controlling portion (23) configured to control display of the recorded-program list on a screen so that the recorded-program list is displayed in a substantially whole of the screen.

7. The digital broadcast receiver (1) according to claim 6, wherein the display controlling portion (23) is configured to control display of the recorded-program list on the screen so that the recorded-program list is displayed in a whole of the screen.

8. A recorded-program display method operated in a digital broadcast receiver (1) comprising a plurality of tuners (3) for continuous and simultaneous recording of a plurality of programs, the method comprising:
recording (S14), by use of the video recorder (16) or an external recording device (18), among a plurality of broadcast programs, programs of a plurality of record-designated channels and a record-designated time zone;
generating a recorded-program list (S32) displaying the programs of the record-designated channels and the record-designated time zone; **characterized in that** programs being recorded are differentiated in a display manner.

9. The recorded-program display method according to claim 8, wherein, in the recorded-program list, unrecorded parts of the programs being recorded are differentiated in a display manner.

10. The recorded-program display method according to claim 9, wherein the color of the unrecorded parts is differentiated from the color of the surrounding.

11. The recorded-program display method according to one of claims 8 to 10, wherein the recorded-program list is generated to display the programs of only the record-designated channels and the record-designated time zone.

12. The recorded-program display method according to one of claims 8 to 11, wherein the recorded-program list is generated to only display programs having been recorded and the programs being recorded.

13. The recorded-program display method according to one of claims 8 to 12, further comprising the step of controlling display of the recorded-program list on a screen so that the recorded-program list is displayed in a substantially whole of the screen.

14. The recorded-program display method according to claim 13, wherein display of the recorded-program list on the screen is controlled so that the recorded-program list is displayed in a whole of the screen.
